# FASCICULE DE BREVET EUROPEEN

(11) **EP 3 587 912 B1**
(45) Date de publication et mention de la délivrance du brevet: **10.08.2022**
(21) Numéro de dépôt: 19186643.3
(22) Date de dépôt: 27.07.2016
(51) Int. Cl.: F21V 5/00, F21V 7/00, G02B 19/00

(54) **SYSTÈME DE COLLIMATION NON-IMAGEUR D'INTENSITÉ LUMINEUSE MAXIMALE**
OPTISCHES SYSTEM ZUR NICHT ABBILDENDEN KOLLIMATION DER MAXIMALEN LICHTINTENSITÄT
OPTICAL SYSTEM FOR NON-IMAGING COLLIMATION OF MAXIMUM LIGHT INTENSITY

(30) Priorité: 30.07.2015 FR 1557347
(43) Date de publication de la demande: 01.01.2020
(62) Demande divisionnaire de: 16760526.0
(73) Titulaire: Gaggione SAS, 01460 Montréal-la-Cluse (FR)
(72) Inventeur: LAURET, Jean-Pierre, 01100 OYONNAX (FR)
(74) Mandataire: Germain Maureau

(56) Documents cités:
- EP-A1- 0 395 156
- EP-A1- 0 563 874
- EP-A1- 2 230 446
- EP-A2- 2 846 179
- WO-A1-2006/072885
- WO-A1-2009/016586
- WO-A1-2012/171439
- US-A1- 2011 102 886

## Description

### Domaine de l'invention

Le domaine de la présente invention est celui des dispositifs d'éclairage. Elle concerne particulièrement, mais pas exclusivement, le domaine des systèmes optiques pour projecteurs, par exemple pour les projecteurs utilisés pour les spectacles, en particulier pour l'éclairage d'une scène. Plus précisément, la présente invention concerne les systèmes optiques pour homogénéiser et uniformiser la synthèse additive d'un ensemble de faisceaux de rayons lumineux par rapport à un axe optique principal à partir d'une source de lumière.

### Art antérieur

De nos jours, les projecteurs de scène ou de spectacle sont constitués d'une source de lumière constituée par exemple par une ampoule, une lampe à décharge ou à incandescence ou encore par des diodes électroluminescentes monochromatiques ou polychromatiques afin d'obtenir une couleur ou une gamme de couleurs par synthèse additive. Dans le cas des projecteurs munis de diodes électroluminescentes, les projecteurs sont munis, à cet effet, d'un réflecteur (parabolique ou elliptique) pour collimater le faisceau lumineux issu de cette source de lumière vers un intégrateur de Köhler par exemple permettant une synthèse additive des longueurs d'ondes comprises dans le faisceau de rayon lumineux.

Ce phénomène de synthèse additive est perçu par l'œil humain au moyen de photorécepteurs présent dans la rétine : les cônes. Ces photorécepteurs se présentent, en général, sous trois types de cônes et chacun des types possède une sensibilité à une gamme de longueur d'onde. Ainsi il est permis à l'être humain une meilleure perception des couleurs. Bien entendu, le terme de « synthèse » est un abus de langage puisque la synthèse ou autrement dit le procédé de mélange de couleurs prend place seulement dans le cerveau. Quoi qu'il en soit, cette synthèse additive permet l'illusion d'une couleur quelconque.

En pratique, les collimateurs formant l'état de l'art, sont conçus pour mettre en forme les faisceaux lumineux des diodes électroluminescentes plus connues sous l'acronyme « LED » pour l'expression anglo-saxonne « Light Emitting Diode », et en particulier les faisceaux lumineux des LEDs multi-puces Rouge, Verte et Bleue également désigné par le terme anglo-saxon LED RGB. Généralement une puce Blanche est associée aux puces Rouge, Vert et Bleu. Cette dernière configuration, dénommée par le terme anglo-saxon LED RGBW, permet une synthèse de couleur plus nuancée et plus riche. Les collimateurs adaptés aux LED RGBW selon l'état de l'art comprennent une partie centrale architecturée pour ne pas former l'image de la puce en utilisant un jeu de dioptres confocaux par exemple et une partie périphérique configurée de sorte à dévier la lumière vers un réseau de microlentille par exemple afin d'améliorer le rendu.

La partie centrale d'un collimateur adapté aux LED RGBW selon l'état de l'art impose des restrictions sur l'ensemble de la géométrie du collimateur, sur la taille de la LED et sur l'angle du faisceau projeté. Ainsi, la géométrie d'un collimateur adapté aux LED RGBW selon l'état de l'art est plus encombrante que celle qu'un collimateur classique prévu pour une LED blanche. Un collimateur adapté aux LED RGBW selon l'état de l'art ne fonctionne de façon optimale que pour une seule taille de LED, et l'angle du faisceau projeté, en particulier l'angle du faisceau projeté par la partie centrale, est plus important que l'asymptote définie par l'étendue géométrique.

Des systèmes optiques en matière transparente sont par exemple connus des documents EP 2230446 A1, WO 2006/072885 A1 et EP 2846179 A2.

Il existe donc un besoin pour un système optique permettant de fournir un mélange de couleurs uniforme et homogène à partir d'une LED RGBW, tout en garantissant une étendue géométrique la plus faible possible, afin de réduire au maximum l'angle du faisceau lumineux projeté.

### Exposé de l'invention

La présente invention a pour but de résoudre tout ou partie des inconvénients mentionnés ci-dessus sous la forme d'un système optique en matière transparente pour des longueurs d'onde comprises dans un ensemble de faisceaux de rayons lumineux et pour aligner ledit ensemble de faisceaux de rayons lumineux par rapport à un axe optique principal à partir d'une source de lumière comprenant un axe d'émission et au moins une surface émettrice de rayons lumineux destinés à être émis dans un espace d'indice de réfraction supérieur ou égal à un ; ledit système optique comprenant :
- une première surface incidente (210) comprenant un premier point singulier proximal (251) situé sur l'axe optique principal (O-O);
- une première surface émergente (410) comprenant un premier point singulier distal (451) situé sur l'axe optique principal (O-O) ;
   la première surface incidente (210) et la première surface émergente (410) sont configurées de façon à définir une zone de foyer intermédiaire (930) située entre la première surface incidente (210) et la première surface émergente (410) ; dans lequel la zone de foyer intermédiaire (930) présente une forme à symétrie de révolution,
   la première surface émergente (410) présentant une forme de calotte torique et/ou la première surface incidente (210) présentant une forme de calotte torique ; tel que le système comprend un ensemble de texture tridimensionnelle comprenant :
      - une première texture tridimensionnelle (430) disposée sur la première surface émergente (410) de sorte à former une première surface texturée (460) ; et
      - une deuxième texture tridimensionnelle (730) disposée sur une deuxième surface émergente de sorte à former une deuxième surface texturée (760), la deuxième surface émergente étant disposée latéralement par rapport à la première surface émergente.

Grâce aux dispositions selon l'invention, le système optique permet d'aligner l'ensemble de faisceaux de rayons lumineux par rapport à l'axe optique principal à partir de la source de lumière.

Le système optique peut en outre présenter une ou plusieurs des caractéristiques suivantes, prises seules ou en combinaison.

Selon un mode de réalisation, le premier point singulier distal est configuré pour former un pôle de la première surface émergente.

Selon un mode de réalisation, le premier point singulier proximal est configuré pour former un pôle de la première surface incidente.

Selon l'invention, la zone de foyer intermédiaire présente une forme à symétrie de révolution.

Selon un mode de réalisation, le système optique comprend une deuxième surface incidente, une deuxième surface émergente, et une surface latérale configurée pour réfléchir par réflexion interne totale les rayons lumineux issus de la deuxième surface incidente vers la deuxième surface émergente de sorte que les rayons lumineux émergeant de la deuxième surface émergente soient compris dans un angle compris entre 0° et 10°, en particulier entre 0° et 5° et de préférence entre 0° et 3° par rapport à l'axe optique principal.

Selon un mode de réalisation, les rayons émergeants de la première surface émergente et les rayons émergeants de la deuxième surface émergeante émergent avec un angle compris entre 0° et 10°, en particulier entre 0° et 5° et de préférence entre 0° et 3° par rapport à l'axe optique principale.

Selon l'invention, le système optique comprend un ensemble de texture tridimensionnelle. Ainsi, grâce à cette disposition, le mélange de couleur est amélioré.

Selon l'invention, l'ensemble de texture tridimensionnelle comprend :
- une première texture tridimensionnelle disposée sur la première surface émergente de sorte à former une première surface texturée ; et
- une deuxième texture tridimensionnelle disposée sur la deuxième surface émergente de sorte à former une deuxième surface texturée.

Ainsi, grâce à cette disposition, les faisceaux de rayons lumineux sont mélangés de sorte à obtenir un couleur homogène.

Selon un mode de réalisation, la première texture tridimensionnelle comprend au moins un premier motif élémentaire orienté sur la première surface texturée selon au moins un vecteur d'un repère primaire. Ainsi, grâce à cette disposition, le mélange de couleur s'effectue de façon homogène.

Selon un mode de réalisation, le repère primaire est défini en coordonnées cartésiennes. Ainsi, grâce à cette disposition, l'orientation du motif élémentaire permet d'homogénéiser la couleur.

Selon un mode de réalisation, la première surface texturée a une surface libre de toute arête vive rentrante ou sortante.

Dit autrement, la première surface texturée a une surface continue et dérivable deux fois.

Selon un mode de réalisation, la première texture tridimensionnelle a une surface libre de toute arête vive rentrante ou sortante. Dit autrement, la première texture tridimensionnelle a une surface continue et dérivable deux fois. En d'autres termes, la première texture tridimensionnelle présente une pente locale continue. Autrement dit, la première texture tridimensionnelle ne présente pas d'arête rentrante vive ni arête sortante vive. Ainsi, grâce à cette disposition, la première texture tridimensionnelle évite toute formation d'images parasites.

Selon un mode de réalisation, la deuxième texture tridimensionnelle comprend au moins un deuxième motif élémentaire orienté sur la deuxième surface émergente selon au moins un vecteur d'un repère secondaire. Ainsi, grâce à cette disposition, le mélange de couleur s'effectue de façon homogène.

Selon un mode de réalisation, le repère secondaire est défini en coordonnées cylindriques. Ainsi, grâce à cette disposition, l'orientation du motif élémentaire permet d'homogénéiser la couleur.

Selon un mode de réalisation, le repère secondaire est défini en coordonnées polaires. Ainsi, grâce à cette disposition, l'orientation du motif élémentaire permet d'homogénéiser la couleur.

Selon un mode de réalisation, le repère secondaire est centré sur l'axe optique principal. Ainsi, grâce à cette disposition, le motif élémentaire est centré sur l'axe optique principal.

Selon un mode de réalisation, la deuxième surface texturée a une surface libre de toute arête vive rentrante ou sortante

Dit autrement, la deuxième texture tridimensionnelle a une surface continue et dérivable deux fois.

Selon un mode de réalisation, la deuxième texture tridimensionnelle a une surface libre de toute arête vive rentrante ou sortante. Dit autrement, la deuxième texture tridimensionnelle a une surface continue et dérivable deux fois. En d'autres termes, la deuxième texture tridimensionnelle présente une pente locale continue. Autrement dit, la deuxième texture tridimensionnelle ne présente pas d'arête rentrante vive ni arête sortante vive. Ainsi, grâce à cette disposition, la deuxième texture évite toute formation d'images parasites.

Selon un mode de réalisation, le premier motif élémentaire se répète par translation. Ainsi, grâce à cette disposition, le premier motif élémentaire présente une répartition homogène.

Selon un mode de réalisation, le deuxième motif élémentaire se répète par rotation autour de l'axe optique principal. Ainsi, grâce à cette disposition, le deuxième motif élémentaire présente une répartition homogène.

Selon un mode de réalisation, le deuxième motif élémentaire se répète par homothétie autour de l'axe optique principal. Ainsi, grâce à cette disposition, le deuxième motif élémentaire est proportionnel en fonction de sa distance au centre.

Selon un mode de réalisation, le système optique comprend un logement étant configurée pour recevoir ladite source de lumière par l'intermédiaire d'une ouverture permettant l'accès au logement au niveau d'un emplacement de positionnement destiné à recevoir totalement ou partiellement la source de lumière. Ainsi, grâce à cette disposition, la source de lumière est logée dans le système optique.

Selon un mode de réalisation, le système optique comprend un support. Ainsi, grâce à cette disposition, le système optique est supporté.

Selon un mode de réalisation, la deuxième surface émergente et la première surface émergente sont délimitées par un deuxième point singulier distal. Ainsi, grâce à cette disposition, le deuxième point singulier distal permet de délimiter la première surface émergente de la deuxième surface émergente.

Selon un mode de réalisation, la deuxième surface incidente et la première surface incidente sont délimitées par un deuxième point singulier proximal. Ainsi, grâce à cette disposition, le deuxième point singulier proximal permet de délimiter la première surface incidente de la deuxième surface incidente.

Selon l'invention, la première surface émergente présente une forme de calotte torique. En d'autres termes, la première surface émergente présente une forme de demi-tore à collier nul. Ainsi, grâce à cette disposition, la première surface émergente est configurée pour permettre le mélange de couleur.

Selon l'invention, la première surface incidente présente une forme de calotte torique. En d'autres termes, la première surface incidente présente une forme de demi-tore à collier nul. Ainsi, grâce à cette disposition, la première surface incidente est configurée pour permettre le mélange de couleur.

Selon un mode de réalisation, le point singulier de la première surface incidente et le point singulier de la première surface émergente sont situés sur l'axe optique principal du système optique. Ainsi, grâce à cette disposition, les rayons lumineux incident ne croisent pas l'axe optique principal ce qui évite la projection de l'image des sources lumineuses.

Selon un mode de réalisation, le système optique est configuré de telle sorte que les rayons lumineux issus de la source de lumière et dont la zone d'incidence est proche de l'axe optique principal comprennent une zone d'émergence permettant l'émergence des rayons lumineux émergeants à proximité du deuxième point singulier distal.

Grâce aux dispositions selon l'invention, le système optique permet d'inverser les rayons lumineux par rapport à l'axe optique, ce qui permet au système optique d'être non-imageur.

Selon un mode de réalisation, la première surface incidente est définie par un premier élément optique incident et la première surface émergente est définie par un premier élément optique émergent, le premier élément optique incident et le premier élément optique émergent formant un élément optique asphérique.

Selon un mode de réalisation, la surface latérale est configurée pour réfléchir par réflexion interne totale les rayons lumineux issus de la deuxième surface incidente vers la deuxième surface émergente de sorte que les rayons lumineux émergeant de la deuxième surface émergente soient compris dans un angle entre 0° et 10°, en particulier entre 0° et 5° et de préférence entre 0° et 3° par rapport à l'axe optique principal et au rayon lumineux émergeant de la première surface émergente.

Selon un mode de réalisation, la deuxième surface émergente est disposée latéralement par rapport à la première surface émergente.

Selon un mode de réalisation, la première surface émergente et la deuxième surface émergente comprennent une délimitation commune distale.

Selon un mode de réalisation, la première surface incidente et la deuxième surface incidente comprennent une délimitation commune proximale. Ainsi, grâce à cette disposition, les rayons lumineux provenant de la première surface incidente sont guidés vers la première surface émergente et les rayons lumineux provenant de la deuxième surface incidente sont guidés vers la deuxième surface émergente.

Selon un mode de réalisation, la deuxième surface émergente est disposée latéralement par rapport à la première surface émergente.

Selon un mode de réalisation, la première surface émergente et la deuxième surface émergente comprennent une délimitation commune. En particulier, la deuxième surface émergente délimite un bord latéral de la première surface émergente. Ainsi, grâce à ces dispositions, l'encombrement du système optique est réduit.

Selon un mode de réalisation, la deuxième surface émergente définit un deuxième élément optique émergent. Ainsi, grâce à cette disposition, les rayons lumineux provenant de la deuxième surface incidente sont guidés par réfraction.

Selon un mode de réalisation, le système optique comprend en outre une assise périphérique. Ainsi, grâce à cette disposition, le système optique peut être posé.

Selon un mode de réalisation, l'assise périphérique comprend un plan de pose. Ainsi, grâce à cette disposition, l'assise périphérique peut être disposée sur le plan de pose.

Selon un mode de réalisation, l'assise périphérique comprend en outre une ouverture comprise dans le plan de pose. Ainsi, grâce à cette disposition, la source de lumière peut être placée dans la cavité au niveau de l'ouverture.

Selon un mode de réalisation, la première surface incidente est définie par un premier élément optique incident.

Selon un mode de réalisation, le premier élément optique incident et le premier élément optique émergent forment un élément optique asphérique biconvexe. Ainsi, grâce à cette disposition, le système optique focalise précisément les rayons lumineux incidents à la première surface incidente.

Selon un mode de réalisation, la deuxième surface incidente est définie par un deuxième élément optique incident.

Selon un mode de réalisation, le premier élément optique incident et le deuxième élément optique incident forment totalement ou partiellement la cavité. Ainsi, grâce à cette disposition, lorsque la source de lumière est introduite dans la cavité, la source de lumière se trouve en regard des éléments optiques incidents.

Selon un mode de réalisation, la première surface incidente et la deuxième surface incidente comprennent une zone d'intersection. Ainsi, grâce à cette disposition, la zone d'intersection permet de délimiter la première surface incidente de la deuxième surface incidente.

Selon un mode de réalisation, la première surface incidente et la deuxième surface incidente comprennent un deuxième point singulier proximal. Ainsi, grâce à cette disposition, le deuxième point singulier proximal permet de délimiter la première surface incidente de la deuxième surface incidente.

Selon un mode de réalisation, la première surface incidente et la deuxième surface incidente comprennent un deuxième point singulier proximal commun. Ainsi, grâce à cette disposition, le deuxième point singulier proximal commun permet de délimiter la première surface incidente de la deuxième surface incidente.

Selon un mode de réalisation, la première surface incidente et la deuxième surface incidente comprennent une ligne singulière proximale. Ainsi, grâce à cette disposition, la ligne singulière proximale permet de délimiter la première surface incidente de la deuxième surface incidente.

Selon un mode de réalisation, la première surface incidente et la deuxième surface incidente comprennent une ligne singulière proximale commune. Ainsi, grâce à cette disposition, la ligne singulière proximale commune permet de délimiter la première surface incidente de la deuxième surface incidente.

Selon un mode de réalisation, la première surface incidente et la deuxième surface incidente comprennent un deuxième point de rebroussement proximal. Ainsi, grâce à cette disposition, le deuxième point de rebroussement proximal permet de délimiter la première surface incidente de la deuxième surface incidente.

Selon un mode de réalisation, la première surface incidente et la deuxième surface incidente comprennent une ligne de rebroussement proximale. Ainsi, grâce à cette disposition, la ligne de rebroussement proximale permet de délimiter la première surface incidente de la deuxième surface incidente.

Selon un mode de réalisation, la zone d'intersection est un deuxième point singulier proximal. Ainsi, grâce à cette disposition, le deuxième point singulier proximal permet de délimiter la première surface incidente de la deuxième surface incidente.

Selon un mode de réalisation, la zone d'intersection est un deuxième point singulier proximal commun. Ainsi, grâce à cette disposition, le deuxième point singulier proximal commun permet de délimiter la première surface incidente de la deuxième surface incidente.

Selon un mode de réalisation, la zone d'intersection est une ligne singulière proximale. Ainsi, grâce à cette disposition, la ligne singulière proximale permet de délimiter la première surface incidente de la deuxième surface incidente.

Selon un mode de réalisation, la zone d'intersection est une ligne singulière proximale commune. Ainsi, grâce à cette disposition, la ligne singulière proximale commune permet de délimiter la première surface incidente de la deuxième surface incidente et est commune à délimiter la première surface incidente de la deuxième surface incidente.

Selon un mode de réalisation, le deuxième point singulier proximal est un deuxième point de rebroussement proximal. Ainsi, grâce à cette disposition, le deuxième point de rebroussement proximal permet de délimiter la première surface incidente de la deuxième surface incidente.

Selon un mode de réalisation, le deuxième point singulier proximal commun est un deuxième point de rebroussement proximal. Ainsi, grâce à cette disposition, le deuxième point de rebroussement proximal permet de délimiter la première surface incidente de la deuxième surface incidente.

Selon un mode de réalisation, la ligne singulière proximale est une ligne de rebroussement proximale. Ainsi, grâce à cette disposition, le deuxième point de rebroussement proximal permet de délimiter la première surface incidente de la deuxième surface incidente.

Selon un mode de réalisation, la ligne singulière proximale commune est une ligne de rebroussement proximale. Ainsi, grâce à cette disposition, la ligne de rebroussement proximale permet de délimiter la première surface incidente de la deuxième surface incidente.

Selon un mode de réalisation, le corps central est venu de matière avec le corps périphérique. Ainsi, grâce à cette disposition, la perte de lumière est minimisée entre le corps périphérique et le corps central.

Selon un mode de réalisation, le premier élément optique émergent et le deuxième élément optique émergent sont venues de matière avec le corps principal. Ainsi, grâce à cette disposition, la perte de lumière est minimisée entre les éléments optiques émergents et le corps principal.

Selon un mode de réalisation, la première surface incidente et la deuxième surface incidente sont configurées pour former un dioptre incident.

Selon un mode de réalisation, la première surface émergente et la deuxième surface émergente sont configurées pour former un dioptre émergent.

Selon un mode de réalisation, le dioptre incident est configuré pour former une cavité. Ainsi, grâce à cette disposition, seuls les rayons lumineux issus de la source de lumière sont réfractés vers le dioptre émergent.

Selon un mode de réalisation, le logement comprend un emplacement de positionnement permettant aux rayons lumineux issus de la source de lumière d'être réfractés par le dioptre incident vers le dioptre émergent. Ainsi, grâce à cette disposition, les rayons lumineux de la source de lumière sont placés dans la zone de foyer objet principal afin d'émerger par le dioptre émergent sensiblement parallèlement à l'axe optique principal.

Selon un mode de réalisation, le logement prolonge la cavité. Ainsi, grâce à cette disposition, la source de lumière est logée dans le système optique.

Selon un mode de réalisation, le logement est un prolongement de la cavité. Ainsi, grâce à cette disposition, la source de lumière est logée dans le système optique.

Selon un mode de réalisation, la zone de foyer objet principal comprend un plan focal principal.

Selon un mode de réalisation, le plan focal principal est configuré pour former une interface entre le logement et la cavité. Ainsi, grâce à cette disposition, la source de lumière est placée dans le logement et la surface émettrice au niveau de l'interface entre le logement et la cavité.

Selon un mode de réalisation, la première surface émergente et la deuxième surface émergente comprennent un deuxième point singulier distal commun. Ainsi, grâce à cette disposition, le deuxième point singulier distal commun permet de délimiter la première surface émergente de la deuxième surface émergente.

Selon un mode de réalisation, la première surface émergente et la deuxième surface émergente comprennent une ligne singulière distale. Ainsi, grâce à cette disposition, la ligne singulière distale permet de délimiter la première surface émergente de la deuxième surface émergente.

Selon un mode de réalisation, la première surface émergente et la deuxième surface émergente comprennent une ligne singulière distale commune. Ainsi, grâce à cette disposition, la ligne singulière distale commune permet de délimiter la première surface émergente de la deuxième surface émergente.

Selon un mode de réalisation, la première surface émergente et la deuxième surface émergente comprennent un deuxième point de rebroussement distal. Ainsi, grâce à cette disposition, le deuxième point de rebroussement distal permet de délimiter la première surface émergente de la deuxième surface émergente.

Selon un mode de réalisation, la première surface émergente et la deuxième surface émergente comprennent une ligne de rebroussement distale. Ainsi, grâce à cette disposition, la ligne de rebroussement distale permet de délimiter la première surface émergente de la deuxième surface émergente.

Selon un mode de réalisation, la zone d'intersection est un deuxième point singulier distal. Ainsi, grâce à cette disposition, le deuxième point singulier distal permet de distinguer la première surface émergente de la deuxième surface émergente.

Selon un mode de réalisation, la zone d'intersection est un deuxième point singulier distal commun. Ainsi, grâce à cette disposition, le deuxième point singulier distal commun permet de distinguer la première surface émergente de la deuxième surface émergente.

Selon un mode de réalisation, le deuxième point singulier distal est une ligne de rebroussement distale. Ainsi, grâce à cette disposition, le deuxième point de rebroussement distal permet de délimiter la première surface émergente de la deuxième surface émergente.

Selon un mode de réalisation, la ligne singulière distale est une ligne de rebroussement distale. Ainsi, grâce à cette disposition, la ligne de rebroussement distale permet de délimiter la première surface émergente de la deuxième surface émergente.

Selon un mode de réalisation, le corps principal est venu de matière avec le premier élément optique incident. Ainsi, grâce à cette disposition, la perte de lumière est minimisée entre le premier élément optique incident et le corps principal.

Selon un mode de réalisation, le corps principal est venu de matière avec le deuxième élément optique incident. Ainsi, grâce à cette disposition, la perte de lumière est minimisée entre le deuxième élément optique incident et le corps principal.

Selon un mode de réalisation, la première surface émergente est voisine de la deuxième surface émergente. Ainsi, grâce à cette disposition, la perte de lumière est minimisée entre la première surface émergente et la deuxième surface émergente.

Selon un mode de réalisation, la première surface émergente est adjacente à la deuxième surface émergente. Ainsi, grâce à cette disposition, la perte de lumière est minimisée entre la première surface émergente et la deuxième surface émergente.

Selon un mode de réalisation, la première surface émergente comprend un premier élément optique émergent. Ainsi, grâce à cette disposition, la première surface émergente peut modifier la trajectoire des rayons lumineux.

Selon un mode de réalisation, la deuxième surface émergente comprend un deuxième élément optique émergent. Ainsi, grâce à cette disposition, la deuxième surface émergente peut modifier la trajectoire des rayons lumineux.

Selon un mode de réalisation, le deuxième élément émergent est disposé latéralement par rapport au premier élément optique émergent. Selon un mode de réalisation, le premier élément optique émergent et le deuxième élément émergent comprennent une délimitation commune. En particulier, le deuxième élément émergent délimite le bord latéral du premier élément optique émergent. Ainsi, grâce à ces dispositions, l'encombrement du système optique est réduit. Ainsi, grâce à cette disposition, l'ensemble des rayons lumineux émis à la périphérie de la source de lumière peut être dirigé sensiblement dans le sens de l'axe optique.

Selon un mode de réalisation, l'extrémité de la deuxième surface émergente est adjacente à l'extrémité de la première surface émergente. Ainsi, grâce à cette disposition, la perte de lumière est minimisée entre la première surface émergente et la deuxième surface émergente.

Selon un mode de réalisation, le système optique comprend en outre une symétrie axiale par rapport à l'axe optique principal. Ainsi, grâce à cette disposition, l'ensemble des rayons lumineux émergeant est sensiblement symétrique par rapport à l'axe optique principal.

Selon un mode de réalisation, le système optique comprend en outre une symétrie planaire par rapport à au moins un plan passant par l'axe optique principal. Ainsi, grâce à cette disposition, l'ensemble des rayons lumineux émergeant est sensiblement symétrique par rapport à l'axe optique principal.

Selon un mode de réalisation, le système optique comprend en outre une symétrie de révolution par rapport à l'axe optique principal. Ainsi, grâce à cette disposition, l'ensemble des rayons lumineux émergeant est sensiblement symétrique par rapport à l'axe optique principal.

Selon un mode de réalisation, la première surface incidente est configurée pour réfracter les rayons lumineux issus de la source de lumière vers la première surface émergente de sorte que les rayons lumineux émergeant de la première surface émergente soient compris dans un angle entre 0° et 10°, en particulier entre 0° et 5° et de préférence entre 0° et 3° par rapport à l'axe optique principal. Ainsi, grâce à cette disposition, l'ensemble des rayons lumineux émergeant est sensiblement parallèle à l'axe optique principal.

Selon un mode de réalisation, la surface latérale est configurée pour réfléchir par réflexion interne totale les rayons lumineux issus de la deuxième surface incidente vers la deuxième surface émergente de sorte que les rayons lumineux émergeant de la deuxième surface émergente soient compris dans un angle entre 0° et 10°, en particulier entre 0° et 5° et de préférence entre 0° et 3° par rapport à l'axe optique principal et au rayon lumineux émergeant de la première surface émergente. Ainsi, grâce à cette disposition, l'ensemble des rayons lumineux émergeant est sensiblement parallèle à l'axe optique principal. Par parallèle, on entend de manière générale, un angle compris entre 0° et 10°, en particulier entre 0° et 5° et de préférence entre 0° et 3° par rapport à une référence.

Selon un mode de réalisation, la première surface émergente comprend une forme convexe. Ainsi, grâce à cette disposition, la première surface émergente permet de former une surface convergente.

Selon un mode de réalisation, la deuxième surface émergente présente une forme convexe. Ainsi, grâce à cette disposition, la deuxième surface émergente permet de former une surface convergente.

Selon un mode de réalisation, la première surface incidente comprend une forme convexe. Ainsi, grâce à cette disposition, la première surface incidente permet de former une surface convergente.

Selon un mode de réalisation, l'ensemble formé de la première surface incidente et de la première surface émergente comprend un foyer objet situé au voisinage de la source de lumière Ainsi, grâce à cette disposition, l'ensemble formé de la première surface incidente et de la première surface émergente permet de focaliser les rayons lumineux.

Selon un mode de réalisation, la première surface émergente comprend une zone de foyer intermédiaire situé à l'intérieure du système optique. Ainsi, grâce à cette disposition, la zone de foyer intermédiaire permet au système optique de faire converger les rayons lumineux.

Selon un mode de réalisation, la zone de foyer intermédiaire comprend une symétrie planaire par rapport à au moins un plan passant par l'axe optique principal. Ainsi, grâce à cette disposition, l'ensemble des rayons lumineux émergeant est sensiblement symétrique par rapport à l'axe optique principal.

Selon un mode de réalisation, la zone de foyer intermédiaire peut être linéaire, triangulaire, rectangulaire, circulaire ou une forme géométrique dont le nombre de cotés peut être au moins cinq. Ainsi, grâce à cette disposition, l'ensemble des rayons lumineux émergeant est sensiblement symétrique par rapport à l'axe optique principal.

Selon un mode de réalisation, la zone de foyer intermédiaire est comprise dans un plan passant par l'axe optique principal. Ainsi, grâce à cette disposition, l'ensemble des rayons lumineux émergeant est sensiblement symétrique par rapport à l'axe optique principal.

Selon un mode de réalisation, la zone de foyer intermédiaire comprend une symétrie de révolution par rapport à l'axe optique principal.

Selon un mode de réalisation, la zone de foyer intermédiaire peut être annulaire. Ainsi, grâce à cette disposition, l'ensemble des rayons lumineux émergeant est sensiblement symétrique par rapport à l'axe optique principal.

Selon un mode de réalisation, la deuxième surface émergente comprend un ensemble d'extrémités. Ainsi, grâce à cette disposition, la deuxième surface émergente peut être clairement définie.

Selon un mode de réalisation, la surface latérale comprend un ensemble d'extrémités. Ainsi, grâce à cette disposition, la surface latérale peut être clairement définie.

Selon un mode de réalisation, la zone de foyer intermédiaire est comprise entre le deuxième point singulier proximal et le deuxième point singulier.

Selon un mode de réalisation, la première surface émergente focalise la lumière en provenance de la zone de foyer intermédiaire, avec un angle compris entre 0° et 10°, en particulier entre 0° et 5° et de préférence entre 0° et 3° par rapport à l'axe optique principal. Ainsi, grâce à cette disposition, les rayons lumineux émergeant de la première surface émergente émergent par rapport à l'axe optique principal.

Selon un mode de réalisation, la surface latérale est configurée pour ordonner les rayons lumineux incidents à la deuxième surface incidente. Ainsi, grâce à cette disposition, le système optique permet d'atteindre les limites minimales prévues par la loi de l'étendue géométrique et un bon mélange de couleurs.

Selon un mode de réalisation, la première surface émergente est configurée pour inverser les rayons lumineux incidents à la première surface incidente par l'intermédiaire de la zone de foyer intermédiaire. Ainsi, grâce à cette disposition, la fraction de lumière collectée par la première surface incidente ne forme pas d'image de la LED. En effet, inverser et réordonner les rayons lumineux empêche de remplir les conditions de l'optique géométrique, notamment l'aplanétisme, nécessaires à la formation d'images.

Selon un mode de réalisation, la surface latérale est configurée pour que les rayons lumineux dont l'angle d'émission est proche du plan de pose sectionnent les rayons lumineux dont l'angle d'émission est proche de la première surface incidente en un point d'intersection situé entre la deuxième surface incidente et la surface latérale. Ainsi, grâce à cette disposition, les rayons lumineux sont inversés de sorte à ne pas projeter l'image des sources lumineuses.

Selon un mode de réalisation, la surface latérale est configurée pour que les rayons lumineux réfléchis sectionnent les rayons lumineux réfractés par la deuxième surface incidente en un point d'intersection situé entre la deuxième surface incidente et la surface latérale. Ainsi, grâce à cette disposition, les rayons lumineux sont inversés de sorte à ne pas projeter l'image des sources lumineuses.

Selon un mode de réalisation, le système optique est configuré pour que les rayons lumineux réfléchis par la surface latérale sectionnent les rayons lumineux réfractés par la deuxième surface incidente en un point d'intersection situé entre la deuxième surface incidente et la surface latérale. Ainsi, grâce à cette disposition, les rayons lumineux sont inversés de sorte à ne pas projeter l'image des sources lumineuses.

Selon un mode de réalisation, la première surface incidente présente une surface convexe. Ainsi, grâce à cette disposition, les rayons lumineux peuvent converger.

Selon un mode de réalisation, la première surface incidente comprend un premier élément optique incident. Ainsi, grâce à cette disposition, les rayons lumineux peuvent être redirigés.

Selon un mode de réalisation, la deuxième surface incidente comprend un deuxième élément optique incident. Ainsi, grâce à cette disposition, les rayons lumineux peuvent être redirigés.

Selon un mode de réalisation, le système optique est constitué de polymère configuré pour permettre de répliquer aisément des formes complexes par moulage.

Selon un mode de réalisation, le système optique est constitué de silicone. Ainsi, grâce à cette disposition, le système optique peut résister à des densités de lumière élevées.

Selon un mode de réalisation, le système optique est constitué de Polyméthacrylate de méthyle. Ainsi, grâce à cette disposition, le système optique est transparent aux longueurs d'ondes émis par la source de lumière.

Selon un mode de réalisation, le silicone est configuré pour résister à des densités de lumière est supérieure à 2 W/cm², en particulier supérieure à 3 W/cm² et notamment supérieure à 4 W/cm². Ainsi, grâce à cette disposition, la structure du matériau optique n'est pas altérée par la forte densité de lumière émise par la source de lumière.

Selon un mode de réalisation, le silicone est configurée pour résister à des densités de lumière dont la gamme de longueur d'onde est inférieure à 470 nm, en particulier inférieure à 460 nm et de préférence inférieure à 440 nm. Ainsi, grâce à cette disposition, le système optique ne jaunit pas en présence d'une forte densité de lumière bleue.

Selon un mode de réalisation, la première texture tridimensionnelle présent un premier réseau de motifs élémentaires. Ainsi, grâce à cette disposition, le mélange de couleur est homogène.

Selon un mode de réalisation, le premier réseau de motifs élémentaires est configuré pour être en fonction de la courbure de la première surface émergente. Ainsi, grâce à cette disposition, la géométrie du premier réseau de motifs élémentaires et la géométrie de la première surface émergente sont coordonnée pour homogénéiser et optimiser le mélange de couleur.

Selon un mode de réalisation, le motif élémentaire présente une symétrie axiale. Ainsi, grâce à cette disposition, les faisceaux de rayons lumineux sont mélangés de sorte à obtenir un couleur homogène.

Selon un mode de réalisation, le motif élémentaire présente une symétrie plane. Ainsi, grâce à cette disposition, les faisceaux de rayons lumineux sont mélangés de sorte à obtenir un couleur homogène.

Selon un mode de réalisation, le motif élémentaire présente une symétrie de révolution. Ainsi, grâce à cette disposition, les faisceaux de rayons lumineux sont mélangés de sorte à obtenir un couleur homogène.

Selon un mode de réalisation, le deuxième réseau de motifs élémentaires comprend un ensemble de couronnes. Ainsi, le deuxième réseau de motifs élémentaires a la même répartition que le faisceau de lumière qui émerge du système optique.

Selon un mode de réalisation, l'ensemble de couronnes comprend des cercles concentriques. Ainsi, l'ensemble de couronne a la même répartition que le faisceau de lumière qui émerge du système optique.

Selon un mode de réalisation, chaque couronne de l'ensemble de couronnes comprend des motifs élémentaires équidistants entre eux et équidistants par rapport à au moins un des points singuliers parmi le premier point singulier distal et le deuxième point singulier distal. Ainsi, grâce à cette disposition, le mélange de couleur est homogène.

Selon un mode de réalisation, une couronne est configurée pour former un étage. Ainsi, grâce à cette disposition, les motifs élémentaires formant la couronne sont répartis à la même hauteur.

Selon un mode de réalisation, l'ensemble de couronnes est configuré pour former un ensemble d'étage dont la projection orthogonal de chaque étage est équidistante entre eux. Ainsi, grâce à cette disposition, la géométrie de l'ensemble de couronnes et la géométrie de la deuxième surface émergente sont coordonnées pour homogénéiser et optimiser le mélange de couleur.

Selon un mode de réalisation, la première texture tridimensionnelle présente un premier réseau de motifs élémentaires régulièrement répartis. Ainsi, grâce à cette disposition, les faisceaux de rayons lumineux sont mélangés de sorte à obtenir un couleur homogène.

Selon un mode de réalisation, la première texture tridimensionnelle présente des motifs élémentaires sensiblement réguliers. Ainsi, grâce à cette disposition, la géométrie des motifs élémentaires et la géométrie de la première surface émergente sont coordonnée pour homogénéiser et optimiser le mélange de couleur.

Selon un mode de réalisation, le motif élémentaire comprend un profil défini par une fonction polynomiale élémentaire. Ainsi, grâce à cette disposition, le profil du motif élémentaire permet d'homogénéiser le faisceau de rayons lumineux émergeant du motif élémentaire.

Selon un mode de réalisation, la fonction polynomiale élémentaire est définie sur un intervalle fini. Ainsi, grâce à cette disposition, le profil comprend une forme définie et finie.

Selon un mode de réalisation, la fonction polynomiale élémentaire présente une continuité des tangentes avec la courbe de la première surface émergente. En d'autres termes, la fonction polynomiale présente un ensemble de dérivées premières égales aux points de jonction entre la fonction polynomiale et la courbe de la première surface émergente. Autrement dit, la fonction polynomiale est d'ordre C₁. Ainsi, grâce à cette disposition, le motif élémentaire ne comprend pas d'angle vif avec la première surface émergente.

Selon un mode de réalisation, la fonction polynomiale élémentaire présente un axe de symétrie. Ainsi, grâce à cette disposition, le profil est homogène.

Selon un mode de réalisation, le motif élémentaire comprend un profil défini par une fonction Spline. Ainsi, grâce à cette disposition, le profil comprend une forme définie et finie.

Selon un mode de réalisation, la fonction Spline présente une continuité des tangentes avec la courbe de la première surface émergente. En d'autres termes, la fonction Spline présente un ensemble de dérivées premières égales aux points de jonction entre la fonction Spline et la courbe de la première surface émergente. Autrement dit, la fonction Spline est d'ordre C₁.

Selon un mode de réalisation, le profil du motif élémentaire se répète par translation selon un premier vecteur primaire du repère primaire. Ainsi, grâce à cette disposition, le motif élémentaire est homogènement réparti.

Selon un mode de réalisation, la fonction polynomiale élémentaire se répète par translation selon le premier vecteur primaire. Ainsi, grâce à cette disposition, le motif élémentaire est homogènement réparti.

Selon un mode de réalisation, le motif élémentaire se répète de façon périodique dans la direction du premier vecteur primaire. Ainsi, grâce à cette disposition, le motif élémentaire est homogènement réparti.

Selon un mode de réalisation, le profil du motif élémentaire se répète par translation selon un deuxième vecteur primaire du repère primaire. Ainsi, grâce à cette disposition, le motif élémentaire est homogènement réparti.

Selon un mode de réalisation, la fonction polynomiale élémentaire se répète par translation selon le deuxième vecteur primaire. Ainsi, grâce à cette disposition, le motif élémentaire est homogènement réparti.

Selon un mode de réalisation, le motif élémentaire se répète de façon périodique dans la direction du deuxième vecteur primaire. Ainsi, grâce à cette disposition, le motif élémentaire est homogènement réparti.

Selon un mode de réalisation, le profil du motif élémentaire se répète par translation selon un troisième vecteur primaire du repère primaire. Ainsi, grâce à cette disposition, le motif élémentaire est homogènement réparti.

Selon un mode de réalisation, la fonction polynomiale élémentaire se répète par translation selon le troisième vecteur primaire. Ainsi, grâce à cette disposition, le motif élémentaire est homogènement réparti.

Selon un mode de réalisation, le motif élémentaire se répète de façon périodique dans la direction du troisième vecteur primaire. Ainsi, grâce à cette disposition, le motif élémentaire est homogènement réparti.

Selon un mode de réalisation, le premier vecteur primaire, le deuxième vecteur primaire et le troisième vecteur primaire du repère primaire se sectionnent en un point d'intersection. Ainsi, grâce à cette disposition, les trois vecteurs comprennent une même origine.

Selon un mode de réalisation, le motif élémentaire défini selon le premier vecteur primaire et le motif élémentaire défini selon le deuxième vecteur primaire sont configurés pour donner une première surface texturée. Ainsi, grâce à cette disposition, la première surface texturée est régulière.

Selon un mode de réalisation, le motif élémentaire défini selon le premier vecteur primaire et le motif élémentaire défini selon le troisième vecteur primaire sont configurés pour donner une surface texturée. Ainsi, grâce à cette disposition, la première surface texturée est régulière.

Selon un mode de réalisation, le motif élémentaire défini selon le troisième vecteur primaire et le motif élémentaire défini selon le deuxième vecteur sont configurés pour donner une première surface texturée. Ainsi, grâce à cette disposition, la première surface texturée est régulière.

Selon un mode de réalisation, le premier vecteur primaire et le deuxième vecteur primaire se sectionnent en formant un angle compris entre 45° et 75°, en particulier entre 50° et 70° et notamment entre 55° et 65°. Ainsi, grâce à cette disposition, le premier réseau de motifs élémentaires comprend des mailles en forme de losanges.

Selon un mode de réalisation, le troisième vecteur primaire et le deuxième vecteur primaire se sectionnent en formant un angle compris entre 45° et 75°, en particulier entre 50° et 70° et notamment entre 55° et 65°. Ainsi, grâce à cette disposition, le premier réseau de motifs élémentaires comprend des mailles en forme de losanges.

Selon un mode de réalisation, le premier vecteur primaire et le troisième vecteur primaire se sectionnent en formant un angle compris entre 100° et 140°, en particulier entre 110° et 130° et notamment entre 115° et 125°. Ainsi, grâce à cette disposition, le premier réseau de motifs élémentaires comprend des mailles en forme de losanges.

Selon un mode de réalisation, la deuxième texture tridimensionnelle présent un deuxième réseau de motifs élémentaires. Ainsi, grâce à cette disposition, le mélange de couleur est homogène.

Selon un mode de réalisation, le deuxième réseau de motifs élémentaires est configuré pour être en fonction de la courbure de la deuxième surface émergente. Ainsi, grâce à cette disposition, la géométrie du deuxième réseau de motifs élémentaires et la géométrie de la deuxième surface émergente sont coordonnée pour homogénéiser et optimiser le mélange de couleur.

Selon un mode de réalisation, le deuxième réseau de motifs élémentaires comprend une pluralité de portions de spirales. Ainsi, le deuxième réseau de motifs élémentaires épouse mieux la forme du faisceau de lumière projeté.

Selon un mode de réalisation, chaque portion de spirale comprend des motifs élémentaires. Ainsi, grâce à cette disposition, les motifs élémentaires sont régulièrement répartis sur la deuxième surface émergente.

Selon un mode de réalisation, chaque portion de spirale comprend un centre situé sur le deuxième point singulier distal. Ainsi, grâce à cette disposition, la pluralité de portions de spirales recouvre totalement ou partiellement la deuxième surface émergente.

Selon un mode de réalisation, chaque portion de spirale comprend un centre situé sur la délimitation commune. Ainsi, grâce à cette disposition, la pluralité de portions de spirales recouvre totalement ou partiellement la deuxième surface émergente.

Selon un mode de réalisation, chaque portion de comprend un centre situé sur la ligne singulière distale. Ainsi, grâce à cette disposition, la pluralité de portions de spirales recouvre totalement ou partiellement la deuxième surface émergente.

Selon un mode de réalisation, chaque portion de spirale comprend un centre situé sur la ligne singulière distale commune. Ainsi, grâce à cette disposition, la pluralité de portions de spirales recouvre totalement ou partiellement la deuxième surface émergente.

Selon un mode de réalisation, la deuxième texture tridimensionnelle présente un deuxième réseau de motifs élémentaires régulièrement répartis. Ainsi, grâce à cette disposition, chaque faisceau de rayons lumineux est mélangé de sorte à obtenir un couleur homogène.

Selon un mode de réalisation, la fonction polynomiale élémentaire présente une continuité des tangentes avec la courbe de la deuxième surface émergente. En d'autres termes, la fonction polynomiale présente un ensemble de dérivées premières égales aux points de jonction entre la fonction polynomiale et la courbe de la deuxième surface émergente. Autrement dit, la fonction polynomiale est d'ordre C₁. Ainsi, grâce à cette disposition, le motif élémentaire ne comprend pas d'angle vif avec la deuxième surface émergente.

Selon un mode de réalisation, la fonction Spline présente une continuité des tangentes avec la courbe de la deuxième surface émergente. En d'autres termes, la fonction Spline présente un ensemble de dérivées premières égales aux points de jonction entre la fonction Spline et la courbe de la deuxième surface émergente. Autrement dit, la fonction Spline est d'ordre C₁.

Selon un mode de réalisation, le profil du motif élémentaire se répète par translation selon un premier vecteur secondaire du repère secondaire. Ainsi, grâce à cette disposition, le motif élémentaire est homogènement réparti.

Selon un mode de réalisation, la fonction polynomiale élémentaire se répète par translation selon le premier vecteur secondaire. Ainsi, grâce à cette disposition, le motif élémentaire est homogènement réparti.

Selon un mode de réalisation, le motif élémentaire se répète de façon périodique dans la direction du premier vecteur secondaire. Ainsi, grâce à cette disposition, le motif élémentaire est homogènement réparti.

Selon un mode de réalisation, le motif élémentaire varie au moins un des paramètres parmi la longueur, la largeur et la hauteur selon la distance du premier vecteur secondaire par rapport à la première surface émergente. Ainsi, grâce à cette disposition, la forme du motif élémentaire dépend de sa distance par rapport à la première surface émergente.

Selon un mode de réalisation, le motif élémentaire varie au moins un des paramètres parmi la longueur, la largeur et la hauteur par l'intermédiaire d'une symétrie cylindrique. Ainsi, grâce à cette disposition, la forme du motif élémentaire dépend de sa distance par rapport à la première surface émergente.

Selon un mode de réalisation, le motif élémentaire varie au moins un des paramètres parmi la longueur, la largeur et la hauteur par l'intermédiaire d'une symétrie cylindrique avec une réflexion de la deuxième surface émergente perpendiculairement à l'axe optique principal. Ainsi, grâce à cette disposition, la forme du motif élémentaire dépend de sa distance par rapport à l'axe optique principal.

Selon un mode de réalisation, la deuxième surface émergente est configurée pour comprendre une transformation du motif élémentaire par homothétie dont le centre est l'axe optique principal. Ainsi, grâce à cette disposition, la forme du motif élémentaire dépend de sa distance par rapport à l'axe optique principal.

La présente invention concerne en outre un dispositif lumineux pour aligner un ensemble de faisceaux de rayons lumineux par rapport à un axe de projection et comprenant au moins une source de lumière et au moins un système optique selon l'invention.

Selon un mode de réalisation, chaque source de lumière comprend au moins deux et de préférence quatre surfaces émettrices de rayons lumineux, avec de préférence une couleur différente par surface émettrice, chaque surface émettrice étant de préférence désaxée par rapport à l'axe optique principal du système optique qui lui est associé.

Selon un mode de réalisation, l'axe de projection comprend un angle compris entre 0° et 10°, en particulier entre 0° et 5° et de préférence entre 0° et 3° avec l'axe optique principal du système optique.

Selon un mode de réalisation, l'axe de projection peut être confondu avec l'axe optique principal d'un système optique.

Selon un mode de réalisation, le dispositif lumineux comprend une pluralité de systèmes optiques selon l'invention,

Selon un mode de réalisation, le dispositif lumineux comprend en outre un substrat.

Selon un mode de réalisation, le dispositif lumineux comprend en outre un circuit imprimé. Ainsi, grâce à cette disposition, des composants électroniques peuvent être assemblés.

Selon un mode de réalisation, le circuit imprimé comprend une pluralité de sources de lumière, chaque source de lumière étant disposée au foyer objet d'un système optique de la matrice. Ainsi, grâce à cette disposition, les sources de lumière peuvent être assemblées avec d'autres composants électroniques.

Selon un mode de réalisation, chaque source de lumière est une diode électroluminescente. Ainsi, grâce à cette disposition, l'intensité de la source de lumière peut être graduée en faisant varier le rapport cyclique de la source de courant et/ou de tension.

Selon un mode de réalisation, la diode électroluminescente émet une gamme de longueur d'onde monochromatique.

Selon un mode de réalisation, l'ensemble de diodes électroluminescentes est configuré pour émettre une lumière monochromatique.

D'autres caractéristiques et avantages de l'invention apparaîtront mieux à la lecture de la description qui suit d'un mode de réalisation de l'invention donné à titre d'exemple non limitatif.

### Liste des figures

L'invention sera mieux comprise à l'aide de la description détaillée qui est exposée ci-dessous en regard du dessin, dans lesquels :
- la figure 1 représente un collimateur selon l'état de l'art ;
- la figure 2 montre un exemple de trajet optique dans le système optique ;
- la figure 3 illustre un exemple de système optique selon un mode de réalisation ;
- la figure 4 présente un exemple de trajet optique dans le système optique selon un mode de réalisation ;
- la figure 5 expose un exemple de trajet optique dans le système optique selon un mode de réalisation ;
- la figure 6 montre une première texture tridimensionnelle selon un mode de réalisation ;
- la figure 7 illustre une première surface texturée selon un mode de réalisation ;
- la figure 8 représente une deuxième texture tridimensionnelle selon un mode de réalisation ;
- la figure 9 expose une vue de dessus d'une deuxième surface texturée selon un mode de réalisation ;
- la figure 10 montre une vue en perspective d'une deuxième surface texturée selon un mode de réalisation ;
- la figure 11 illustre un exemple de répartition de motif élémentaire sur une première surface émergente selon un mode de réalisation ;

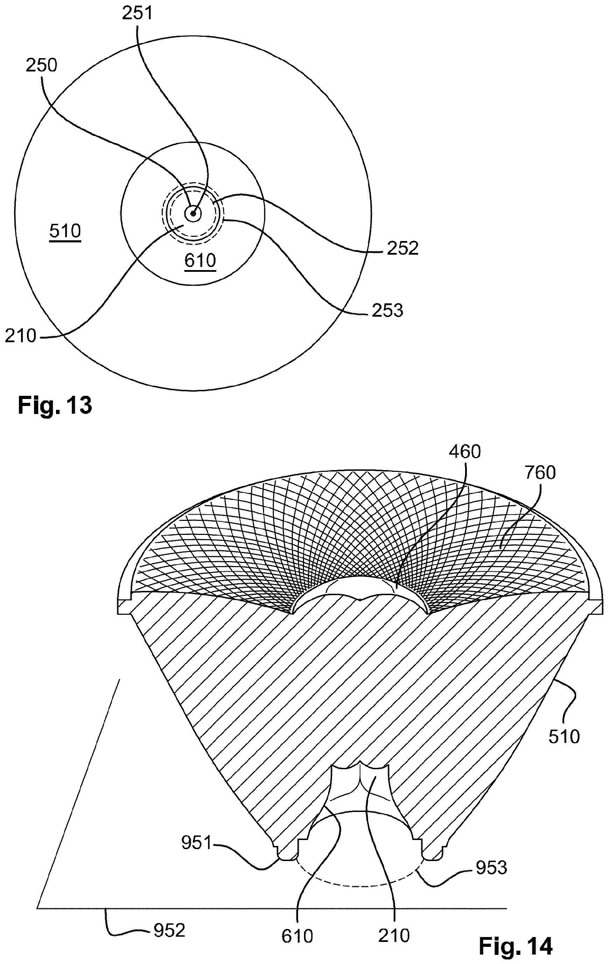

- les figures 12 et 13 présente une vue schématique de dessus et de dessous du système optique selon un mode de réalisation ;
- la figure 14 expose une vue de perspective en coupe du système optique selon un mode de réalisation ; et
- la figure 15 représente une vue en perspective du système optique selon un mode de réalisation.

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un mode de réalisation de l'invention

### Principe général

Par système optique **100,** il est entendu dans la présente demande une pièce transparente à l'intérieur de laquelle des rayons lumineux se propagent de manière contrôlée depuis une des extrémités du système optique **100,** appelée surface incidente jusqu'à une surface émergente. Les rayons lumineux pénètrent dans le système optique **100** par l'intermédiaire d'un dioptre incident **126** et se propagent éventuellement par réflexions internes sur une surface latérale **510,** et quittent le système optique **100** par un dioptre émergent **147.** En pratique, à proximité de la surface incidente, est disposée un objet lumineux **900,** par exemple de petite taille, telle qu'une diode électroluminescente ou un système COB (en anglais : « Chip-On-Board »). Lorsque l'objet lumineux **900** est une source de lumière **901,** les rayons lumineux émis par cette source de lumière **901** se propagent dans le système optique **100** d'une surface incidente vers une surface émergente et éventuellement par l'intermédiaire de surfaces latérales situées entre la surface incidente et la surface émergente.

Le principe général de l'invention repose sur un système optique **100** en matière transparente pour des longueurs d'onde comprises dans un ensemble de faisceaux de rayon lumineux et pour aligner l'ensemble de faisceaux de rayons lumineux par rapport à un axe optique principal **0-0** à partir d'une source de lumineuse ayant une pluralité de source de lumière **901,** comme par exemple une LED RGBW, afin d'en obtenir une synthèse additive sans irisation du mélange de couleur, sans projection nette de l'image de la puce et sans tâche sombre au centre du faisceau.

Dans certain cas, en particulier lorsque la source de lumière est blanche ou polychromatique, comme par exemple une ampoule électrique, le phénomène d'irisation peut apparaitre et est dû à l'aberration chromatique latérale du système optique classique. Afin de pallier ce défaut, il existe des solutions comme par exemple l'utilisation de verre flint en combinaison avec un verre crown. Cependant, l'invention décrite ci-après traite du problème d'irisation qui peut apparaitre lors de synthèse additive et non de l'aberration chromatique latérale.

En effet, les systèmes optiques classiques, destinés aux projecteurs en particulier, sont assimilables à des systèmes aplanétiques, du moins pour les zones fonctionnant en transmission. Par conséquent, associés à une LED RGBW, ils projettent une image plus ou moins nette de la source de lumière composée de quatre puces de couleurs différentes. Dans ces conditions on ne peut pas mélanger correctement les couleurs des puces de la LED.

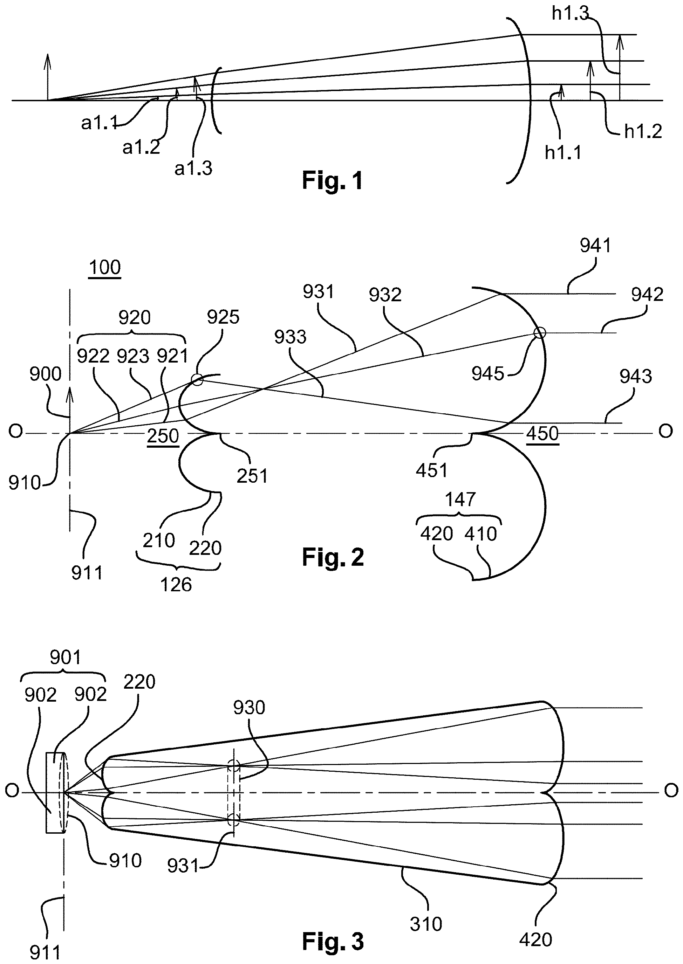

Ceci est dû au fait que les rayons lumineux issus du foyer objet d'un système optique classique sont ordonnés pour générer un faisceau de rayon parallèle. Pour des petits angles d'ouverture, la valeur du sinus de l'angle, par exemple a1.1, a1.2 et a1.3, représentés sur la figure 1, est approximativement égale à la valeur de l'angle même. De plus, la distance d'émergence d'un rayon optique par rapport à l'axe optique principal **O-O,** par exemple h1.1, h1.2 et h1.3, et proportionnelle à l'angle d'incidence du rayon lumineux incident à la surface incidente. La figure 1 illustre cet exemple : a1.1 α h1.1, a1.2 α h1.2 et a1.3 ∝ h1.3. Par ailleurs, pour les petits angles d'ouvertures, la condition d'aplanétisme indique également que la distance d'émergence d'un rayon optique par rapport à l'axe optique principal **0-0** et également proportionnelle à l'angle d'incidence du rayon lumineux incident à la surface incidente. Ce dernier énoncé implique clairement que la condition d'aplanétisme est vérifiée pour un système optique classique et permet ainsi l'obtention d'une image nette : c'est l'approximation de Gauss. Dès lors, un système optique classique comme défini précédemment projettera une image plus ou moins nette d'une source de lumière, puisque l'approximation de Gauss sera plus ou moins vérifiée.

La demanderesse propose un système optique **100** configuré de sorte que la relation entre l'approximation de l'angle d'incidence et la distance d'émergence du rayon optique émergent par rapport à l'axe optique principal **0-0** soit proportionnellement décroissante de sorte à ne pas projeter d'image nette de la source lumineuse, ce qui a pour conséquence de mélanger les couleurs des différentes puces de la LED, ainsi qu'une surface émergente texturée pour uniformiser l'homogénéisation de la synthèse additive. Dans ces conditions, l'approximation de Gauss n'est pas vérifiée et la relation entre l'angle d'incidence et la distance du rayon émergent n'est pas croissante. Par conséquence, l'image de la source de lumière **901** est uniformément homogène et décorrélée de sa forme.

Ainsi l'invention améliore la synthèse additive en uniformisant l'homogénéisation du mélange de couleur en surface émergente et en décorrélant la source de lumière **901.**

### Description générale d'un mode réalisation

En se référant aux figures 2 à 5, il peut être observé la projection de l'image d'un objet réalisé par un système optique selon l'invention.

Comme représenté sur les figures 3, 4 et 5, le système optique comprend un ensemble de sources de lumière qui émet des faisceaux composite de rayons lumineux incidents en direction d'un système optique **100** qui intègre l'esprit de l'invention.

Le projecteur de lumière permet ainsi de re-projeter le faisceau lumineux issu de cette source de lumière devant lesquels peuvent être placés un écran.

La source de lumière **901** définit un axe optique principal **O-O.** Ce système optique **100,** réalisé de préférence de manière monobloc en polymère et plus exactement en silicone ou en Polyméthacrylate de méthyle plus connu sous le nom de PMMA, comprend un corps central **310** et un corps périphérique **320.** Le corps central **310** et le corps périphérique **320** sont venus de matière.

Cette disposition possède quelques avantages comme, par exemple, celle de résister à de forte densité de lumière bleue (entre 2 W/cm² et 10 W/cm²) mais aussi permettre la formation de forme complexe comme celle du système optique **100** décrit ci-après.

La figure 2 représente le système optique **100** ainsi que les chemins optiques de rayons lumineux afin de faciliter la compréhension de l'invention. Dans cet exemple, est représenté un objet lumineux **900** ou plus précisément une source de lumière **901.** Cette source de lumière **901** comprend un axe d'émission (non représenté) et au moins une surface émettrice **902,** également appelé élément émetteur de rayons lumineux destinés à être émis dans un espace d'indice de réfraction supérieur ou égal à un. Les rayons lumineux émis sont répartis en deux catégories de faisceaux : faisceau central composite **920** et faisceau latéral composite **960** (non représenté sur la figure 2). L'axe d'émission de la source de lumière **901** se trouve plus ou moins au centre de la surface émettrice **902** de la source de lumière **901** et est normal à la surface émettrice **902.**

La source de lumière **901** est placée dans la zone de foyer objet principal **910** ou plus exactement la surface émettrice **902** est placée sur le plan focal objet principal **911.** Le système optique **100** comprend, comme mentionné précédemment, un dioptre incident **126** et un dioptre émergent **147.** Le dioptre incident **126** est destiné à réfracter les rayons lumineux émis par la source de lumière **901** vers le dioptre émergent **147.** Plus précisément, les rayons lumineux issus de la source de lumière **901** placée dans la zone de foyer objet principal **910,** ou plus rigoureusement dans le plan focal objet principal **911,** et incident au dioptre incident **126** sont réfractés vers le dioptre émergent **147.** Ce dernier, c'est-à-dire le dioptre émergent **147,** est configuré pour réfracter les rayons lumineux provenant du dioptre incident **126** vers un écran ou à l'infini. Le dioptre incident **126** et le dioptre émergent **147** sont traversés par un axe optique principal **O-O.**

Dans cet exemple illustré sur la figure 2, les rayons lumineux du faisceau central composite **920** sont répartis en trois sous-catégories : les rayons lumineux proches incidents **921** c'est-à-dire dont la zone d'incidence **925** est près de l'axe optique principal **O-O,** les rayons lumineux extrêmes incidents **923** autrement dit les rayons lumineux dont la zone d'incidence **925** est la plus éloignée d'une des extrémités du dioptre incident **126** et les rayons lumineux centraux incidents **922,** en d'autres termes les rayons lumineux dont la région d'incidence est située entre les rayons lumineux proches incidents **921** et les rayons lumineux extrêmes incidents **923.**

Le dioptre incident **126,** décrit précédemment, comprend une première surface incidente **210** qui définit un premier élément optique incident **220.** La première surface incidente **210** comprend une cavité proximale **250.** Cette dernière, c'est-à-dire la cavité proximale **250,** est formée par un premier point singulier proximal **251** dans le premier élément optique incident **220.** Pour prendre un exemple un peu imagé de cette configuration, cette cavité proximale **250** est similaire à une cavité située sur la partie inférieure d'une pomme : la cavité de l'œil. Dit autrement, la cavité proximal **250** associé à la première surface incidente **210** présentent une forme de calotte torique, plus exactement la première surface incidente **210** présente une forme de demi-tore à collier nul. En effet, le premier élément optique incident **220** présente une forme de demi-tore à collier nul.

Le dioptre émergent **147,** annoncé précédemment, comprend une première surface émergente **410** qui définit un premier élément optique émergent **420.** La première surface émergente **410** comprend une cavité distale **450.** Cette dernière, c'est-à-dire la cavité distale **450,** est formée par un premier point singulier distal **451** dans le premier élément optique émergent **420.** Pour prendre un exemple un peu imagé de cette configuration, cette cavité distale **450** est similaire à une cavité située sur la partie supérieure d'une pomme : la cavité pédonculaire. Dit autrement, la cavité distale **450** associé à la première surface émergente **410** présentent une forme de calotte torique, plus exactement la première surface émergente **410** présente une forme de demi-tore à collier nul. En effet, le premier élément optique émergent **450** présente une forme de demi-tore à collier nul.

Bien évidemment, le premier point singulier distal **451** est un point singulier éloigné de la source de lumière **901** puisque il est compris dans le dioptre émergent **147.** Au contraire le premier point singulier proximal **251** est situé sur le dioptre incident **126,** c'est-à-dire le dioptre qui est traversé en premier par les rayons lumineux autrement dit c'est un point singulier qui est proche de la source de lumière **901.**

Comme il peut être observé sur la figure 2, la cavité distale **450** et la cavité proximale **250** sont situées sur l'axe optique principal **O-O.** En effet, le premier point singulier distal **451** et le premier point singulier proximal **251** forment partiellement l'axe optique principal **O-O.**

Également représenté sur la figure 3, le premier élément optique incident **220** peut présenter une forme curviligne, plus précisément une forme convexe. Le premier élément optique incident **220** peut présenter, plus exactement, une forme d'élément optique convexe configurée pour permettre aux rayons incidents d'être réfractés vers une zone de foyer intermédiaire **930.**

Le premier élément optique émergent **420** peut présenter également une forme curviligne, plus précisément une forme convexe. Le premier élément optique émergent **420** peut présenter, plus exactement, une forme d'élément optique convexe configurée pour permettre aux rayons provenant de la zone de foyer intermédiaire **930** d'émerger avec un angle compris entre 0° et 10°, en particulier entre 0° et 5° et de préférence entre 0° et 3° par rapport à l'axe optique principal **O-O.**

En effet, dans ce mode de réalisation, le premier élément optique incident **220** et le premier élément optique émergent **420** peuvent définir la zone de foyer intermédiaire **930.** Cette zone de foyer intermédiaire **930** peut s'étendre tout autour l'axe optique principal **0-0** et entre le premier élément optique émergent **420** et le premier élément optique incident **220,** plus précisément la zone de foyer intermédiaire **930** est placée entre la première surface émergente **410** et la première surface incidente **210.** De façon plus rigoureuse, le premier élément optique émergent **420** comprend un plan focal intermédiaire **931.** Ce dernier, c'est-à-dire le plan focal intermédiaire **931** peut former un angle compris entre 80° et 90°, en particulier entre 85° et 90° et de préférence entre 87° et 90° avec l'axe optique principal **O-O.** Ainsi, grâce à cette configuration, toute image intermédiaire formée par le premier élément optique incident **220** de la source de lumière **901** se trouve au niveau du plan focal intermédiaire **931** du premier élément optique émergent **420.** En d'autres termes, l'image intermédiaire du premier élément optique incident **220** se situe dans la zone de foyer intermédiaire **930** du système optique **100** de sorte à former l'image finale de la source de lumière **901** à l'infinie.

Ainsi, la configuration du premier élément optique émergent **420** et du premier élément optique incident **220** permettent la constitution d'une zone de foyer objet principal **910** entre le premier élément optique incident **220** et la surface émettrice **902** de la source de lumière **901** et la zone de foyer intermédiaire **930** situé entre le premier élément optique émergent **420** et le premier élément optique incident **220** dans le système optique **100.** Dans certain cas, la zone de foyer objet principal **910** peut être confondue avec la surface émettrice **902** de la source de lumière **901.** Cette configuration permet d'inverser les rayons lumineux du faisceau central composite **920.** De cette manière, lorsqu'une source de lumière **901** est placée sur la zone de foyer objet principal **910** ou plus rigoureusement dans le plan focal objet principal **911,** tous rayons appartenant au faisceau central composite **920** de la source de lumière **901** et incidents à la première surface incidente **210** sont réfractés vers le premier élément optique émergent **420** de sorte à émerger parallèlement à l'axe optique principal **O-O.** Dès lors, l'image de la source de lumière **901** est inversée c'est-à-dire que l'image de la source de lumière **901** subit, au passage du premier élément optique incident **220,** une symétrie centrale ayant pour centre la zone de foyer intermédiaire **930.** Selon un mode de réalisation, la symétrie centrale peut être substituée par une homothétie de rapport négatif.

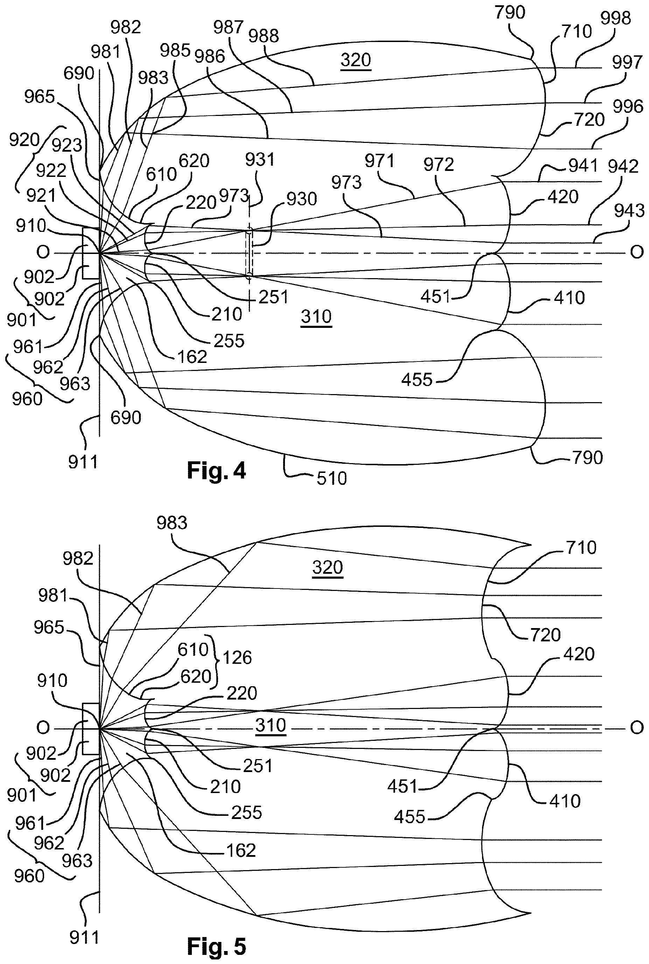

La figure 4 représente le cheminement optique des rayons lumineux composant le faisceau central composite **920** et le faisceau latéral composite **960.** En se référant à la figure 2, le trajet optique du faisceau central composite **920,** est décrit ci-après afin de permettre une meilleure compréhension de celui-ci.

La source de lumière **901** est placée, comme décrit précédemment, face au système optique **100.** Le premier élément optique incident **220** est configuré pour réfracter les rayons lumineux provenant de la source de lumière **901** vers le premier élément optique émergent **420.** Plus exactement, la première surface incidente **210** est configurée pour que les rayons lumineux appartenant au faisceau central composite **920** et dont l'angle d'émission est proche de l'axe optique principal **O-O,** c'est-à-dire les rayons lumineux proches incidents **921,** sectionnent les rayons lumineux extrêmes incidents **923** dont l'angle d'émission est proche de l'extrémité de la première surface incidente **210** en un point d'intersection situé dans la zone de foyer intermédiaire **930** et à proximité ou dans le plan focal intermédiaire **931** et entre la première surface incidente **210** et la première surface émergente **410.** Pour être tout à fait exact, les rayons lumineux proches incidents **921** incident à la première surface incidente **210** sont réfractés vers la zone de foyer intermédiaire **930** tout comme les rayons lumineux extrêmes incidents **923** et les rayons lumineux centraux incidents **922.** Une fois le dioptre incident **126** traversé, les rayons lumineux proches incidents **921** sont qualifiés de rayons lumineux proches réfractés **971,** les rayons lumineux extrêmes incidents **923** de rayons lumineux extrêmes réfractés **973** et les rayons lumineux centraux incidents **922** de rayons lumineux centraux réfractés **972.** Ce sont ces derniers qui se sectionnent en un point d'intersection situé dans la zone de foyer intermédiaire **930** et à proximité ou dans le plan focal intermédiaire **931.** Ces rayons, c'est-à-dire les rayons lumineux proches réfractés **971,** rayons lumineux extrêmes réfractés **973** et rayons lumineux centraux réfractés **972** se propagent dans le corps central **310** vers la première surface émergente **410** afin d'émerger du système optique **100** en rayons lumineux proches émergents **941,** rayons lumineux extrêmes émergents **943** et rayons lumineux centraux émergents **942** respectivement.

En d'autres termes, le système optique est configuré de telle sorte que plus l'angle d'émission d'un rayon lumineux du faisceau central composite **920** est éloigné de l'axe optique principal **O-O,** plus le rayon lumineux émergent respectif a une distance proche de l'axe optique principal **O-O.** Au contraire, le système optique est configuré de telle sorte que plus l'angle d'émission du faisceau central composite **920** issu de la source de lumière est proche de l'axe optique principal **O-O,** plus le rayon lumineux émergent respectif a une distance éloignée de l'axe optique principal **O-O.** Autrement dit, la distance comprise entre le rayon lumineux émergent issue d'un rayon lumineux proche incident **921** et l'axe optique principal **O-O,** c'est-à-dire entre rayons lumineux proches émergents **941** et l'axe optique principal **0-0** est plus grande que la distance comprise entre le rayon lumineux émergent issue d'un rayon lumineux extrême incident **923** et l'axe optique principal **O-O,** c'est-à-dire entre rayons lumineux extrêmes émergents **943** et l'axe optique principal **O-O.**

En d'autres termes, le système optique **100** est configuré de telle sorte que la distance d'un rayon lumineux émergent par rapport à l'axe optique principal **O-O** diminue en fonction de l'augmentation de l'angle d'émission du rayon lumineux respectif issu de la source de lumière **901,** et réciproquement la distance d'un rayon lumineux émergent par rapport à l'axe optique principal **0-0** augmente en fonction de la diminution de l'angle d'émission du rayon lumineux respectif issu de la source de lumière **901.**

Afin d'obtenir cette inversion du faisceau central composite **920,** le calcul des premières surfaces consiste à mettre en équations la première surface incidente **210** du premier élément optique incident **220** et la première surface émergente **410** du premier élément optique émergent **420** avec pour contrainte la focalisation des rayons lumineux émergents et des rayons lumineux focalisés dans la zone de foyer intermédiaire **930.** Le jeu d'équations ainsi réalisé est couplé et donne comme résultat la forme du premier élément optique incident **220** avec une cavité proximale **250** et la forme du premier élément optique émergent **420** avec une cavité distale **450.**La forme du corps principal du système optique **100,** représenté sur les figures 4, 5, 15 et 16 a un aspect extérieur se rapprochant de la forme d'une demi-sphère plus précisément, la forme du corps principal du système optique **100,** se rapproche de la forme d'un demi-cercle tronqué, lorsque le système optique **100,** est observé de profil, puisque le sommet du demi-cercle peut être tronqué afin de former un plan de pose **952** avec une assise périphérique **951** comprise dans et/ou sur le plan de pose **952** et sur laquelle peut se reposer le système optique **100,** lorsque ce dernier est posé.

Pour des raisons de clarté, la description de la forme géométrique globale du système optique **100,** a été simplifiée et réduite au terme de sphère. Selon certain mode de réalisation, le système optique **100,** peut présenter une forme demi-ovale, demi-parabolique et/ou demi-elliptique selon les caractéristiques de la source de lumière **901,** les dimensions du système optique **100,** et/ou de l'indice de réfraction de la matière utilisée pour former ledit système optique **100.**

Le système optique **100** comprend en outre une deuxième surface incidente **610,** une surface latérale **510** et une deuxième surface émergente **710.**

Comme le permet la vue en coupe sur les figures 4 et 5, le système optique **100,** comprend une cavité **162** se trouvant entre le plan focal principal **911** et le dioptre incident **126** comprenant une première surface incidente **210** et la deuxième surface incidente **610.** La première surface incidente **210** et la deuxième surface incidente **610** forment respectivement la voûte de la cavité **162** et la paroi latérale de la cavité **162.** Cette cavité **162** est configurée pour recevoir le faisceau central composite **920** et le faisceau latéral composite **960** de la source de lumière **901** par l'intermédiaire d'une ouverture **965** permettant l'accès à cette cavité **162.**Comme précisé précédemment, le système optique **100** est orienté par rapport à la source de lumière **901** de sorte que les faisceaux incidents parviennent sur le système optique **100,** au niveau de sa surface incidente avec un angle relatif à l'axe optique de la source de lumière **901.** L'ensemble de surface formant le dioptre incident **126** recouvre totalement ou partiellement la cavité **162** et peut être sensiblement plane ou de forme convexe en fonction des modes de réalisation.

La périphérie externe du système optique **100** représentée sur la figure 4, comprend une bordure périphérique supérieure **790** de forme sensiblement linéaire, circulaire, annulaire, rectangulaire ou polygonale entre autre, et s'étend dans un plan sensiblement perpendiculaire à l'axe optique principal **0-0** du système optique **100.** Cette bordure périphérique supérieure **790** peut être formée par une deuxième surface émergente **710.**

La périphérie externe du système optique **100** comprend également une bordure périphérique inférieure **690** de forme sensiblement linéaire, circulaire, annulaire, rectangulaire ou polygonale entre autre, et s'étend dans un plan sensiblement perpendiculaire à l'axe optique principal **0-0** du système optique **100.** Cette bordure périphérique inférieure **690** peut être formée par une deuxième surface incidente **610.** Selon les modes de réalisations, cette bordure périphérique inférieure **690** peut former en totalité ou en partie l'ouverture **965** permettant l'accès à cette cavité **162.** Sur la bordure périphérique inférieure **690** peut être formé un support (non représenté) entre la bordure périphérique inférieure **690** et le plan de pose **952.** Le support destiné supporter le système optique **100.**

Les figures 4 et 5 représentent le cheminement d'un ensemble de rayon lumineux émis par la source de lumière **901** au sein du système optique **100,** afin de permettre une meilleure compréhension de ceux-ci. Dans la suite de cette description générale, seul le cheminent de l'ensemble des rayons lumineux du faisceau latéral composite **960** sera décrit.

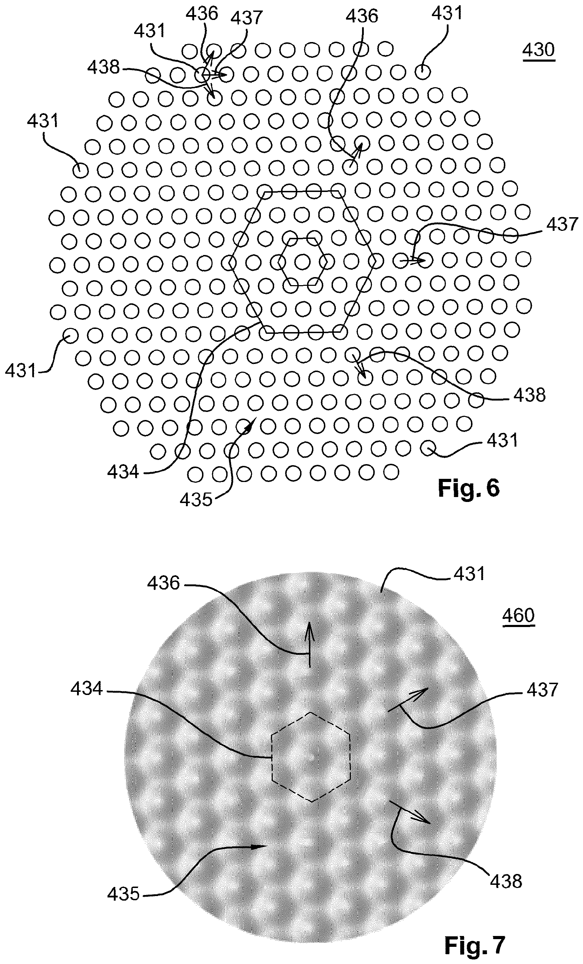

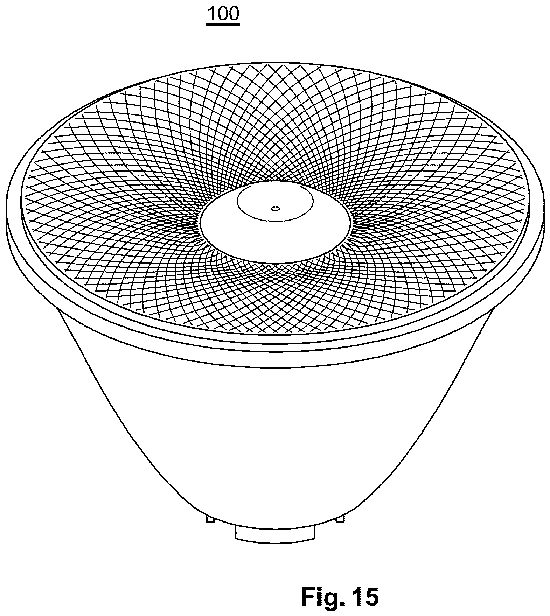

La source de lumière **901,** comme mentionné précédemment, est admise totalement ou partiellement dans le système optique **100,** par l'intermédiaire d'un passage **953,** représentée à la figure 15, comprise dans le plan de pose **952** et permettant l'accès à un logement formé à l'intérieure du système optique **100.** Ce logement prolonge la cavité **162.** Le logement est formé par un support servant à supporter le système optique **100.** La première surface incidente **210** est délimitée par la deuxième surface incidente **610** et forment la cavité **162** comme décrit précédemment. Dans la région transitoire, où exprimé autrement à l'interface entre le logement et la cavité se situe la zone de foyer objet principal **910,** où plus précisément le plan focal principal **911.** Cette délimitation, formée par la première surface incidente **210** et la deuxième surface incidente **610,** se présent, sur les figures 4 et 6, sous la forme d'une deuxième cavité proximal **650** délimitant une zone d'intersection proximale **252** entre la première surface incidente **210** et la deuxième surface incidente **610.** Cette zone d'intersection proximale **252** est formée par un premier point singulier proximal **251** commun et plus particulièrement sous la forme d'un premier point de rebroussement proximal **255.** En pratique, cette délimitation, c'est-à-dire cette zone d'intersection proximale **252,** peut se présenter sous la forme d'une première ligne singulière proximale commune et plus particulièrement sous la forme d'une première ligne de rebroussement proximale.

Plus exactement, le premier point singulier proximal **251** est un premier point de rebroussement proximal, plus précisément un premier point de rebroussement proximal de premier degré formé partiellement par la forme convexe de la deuxième surface incidente.

Plus rigoureusement, la première ligne singulière proximale est une première ligne de rebroussement, plus précisément une première ligne de rebroussement proximal de premier degré formé partiellement par la forme convexe de la deuxième surface incidente.

Le faisceau latéral composite **960** incident, c'est-à-dire les rayons lumineux incidents à la deuxième surface incidente, sont réfractés vers la surface latérale **510** du système optique **100,** ou plus exactement vers la surface émergente périphérique : la deuxième surface émergente **710.** En effet, la surface latérale **510** et l'une des extrémités de la deuxième surface émergente sont confondues afin de former la bordure périphérique supérieure **790.**

La deuxième surface émergente **710** reçoit ainsi par l'intermédiaire de la surface latérale **510,** le faisceau latéral composite **960** incident à la deuxième surface incidente.

Les rayons réfléchis par la surface latérale **510** émergent de la deuxième surface émergente **710** avec un angle compris entre 0° et 10°, en particulier entre 0° et 5° et de préférence entre 0° et 3° par rapport à l'axe optique principal **0-0** grâce à un deuxième élément optique **720** présentant une forme curviligne, plus précisément une forme convexe définissant la deuxième surface émergente **710.**

La forme convexe de la deuxième surface émergente **710** comprend une deuxième cavité distale permettant de délimiter une zone d'intersection distale entre la deuxième surface émergente **710** et la première surface émergente **410.** Cette zone d'intersection distale est commune à la deuxième surface émergente **710** et à la première surface émergente **410** et se présente sous la forme d'un deuxième point singulier distal **455.** Autrement dit la deuxième surface émergente et la première surface émergente **410** comprennent un deuxième point singulier distal **455** commun. En pratique, cette délimitation, c'est-à-dire le deuxième point singulier distal **455** commun, peut se présenter sous la forme d'une deuxième ligne singulière distale **453** commune à la deuxième surface émergente et à la première surface émergente **410,** autrement dit la deuxième surface émergente et la première surface émergente **410** comprennent une deuxième ligne singulière distale **453** commune.

Plus exactement, le deuxième point singulier distal **455** est un deuxième point de rebroussement distal, plus précisément un deuxième point de rebroussement distal de premier degré formé partiellement par la forme convexe de la deuxième surface émergente.

Plus rigoureusement, la deuxième ligne singulière distale **453** est une deuxième ligne de rebroussement distale, plus précisément une deuxième ligne de rebroussement distale de premier degré formé partiellement par la forme convexe de la deuxième surface émergente **610.**

Selon un autre mode de réalisation, la deuxième surface émergente **610** peut présenter une forme concave. Dès lors, le deuxième point de rebroussement distal, est un deuxième point de rebroussement distal de second degré formé partiellement par la forme concave de la deuxième surface émergente **610.** Plus rigoureusement, la deuxième ligne de rebroussement distale est une deuxième ligne de rebroussement distale de second degré formé partiellement par la forme concave de la deuxième surface émergente.

La paroi interne de la cavité **162** est configurée pour orienter, par réflexion interne totale, le faisceau latéral composite **960** incident provenant de la deuxième surface incidente **610** vers la deuxième surface émergente **710.** Plus exactement, la surface latérale **510** est configurée pour que les rayons lumineux rasant incidents **961,** c'est-à-dire les rayons lumineux dont l'angle d'émission est proche du plan de pose **952,** sectionnent les rayons lumineux intermédiaires incidents **963,** c'est-à-dire les rayons lumineux dont l'angle d'émission est proche de l'extrémité de la première surface incidente **210** et par la même occasion avoisinant le faisceau central composite **920** en un point d'intersection périphérique **985** situé entre les extrémités de la deuxième surface incidente et les extrémités de la surface latérale **510** en se référant au trajet optique des rayons lumineux.

Pour être tout à fait exact, les rayons lumineux rasants incidents **961** incident à la deuxième surface incidente **610** sont réfractés vers la surface latérale **510** tout comme les rayons lumineux intermédiaires incidents **963.** Une fois le dioptre incident **126** traversé, les rayons lumineux rasants incidents **961** sont qualifiés de rayons lumineux rasants réfractés **981,** les rayons lumineux intermédiaires incidents **963** de rayons lumineux intermédiaires réfractés **983.** Les rayons lumineux rasants réfractés **981** sont ensuite réfléchis vers la deuxième surface émergente **710** et sont de nouveau qualifiés de rayons lumineux rasants réfléchis **986.** Ce sont, en effet, les rayons lumineux rasants réfléchis **986** qui sectionnent au point d'intersection périphérique **985** les rayons lumineux intermédiaires réfractés **983** situé entre la surface latérale **510** et la deuxième surface incidentes **610,** avant d'émerger par la deuxième surface incidente **710** en devenant des rayons lumineux rasants émergent **996.**

Il en va de même pour les rayons lumineux médians incidents **962** : ils sont d'abord réfractés par la deuxième surface incidente **610** et ensuite les rayons lumineux médians réfractés **982** sont réfléchis par la surface latérale **510** pour devenir des rayons lumineux médians réfléchis **987** avant d'émerger par la deuxième surface émergente **710** en rayons lumineux médians émergents **997.**

Par analogie, l'homme du métier comprendra que les références **983, 988** et **998** décrivent les rayons lumineux intermédiaires incidents **962** en différentes étapes du cheminement entre la deuxième surface incidente **210** et la deuxième surface émergente **610** en passant par la surface latérale **510.**

En d'autres termes, le système optique **100** est configuré de telle sorte que plus l'angle d'émission d'un rayon lumineux intermédiaire incident **963** issu de la source de lumière **901** est éloigné du plan focal principal **911,** plus le rayon lumineux émergent respectif a une distance éloignée de l'axe optique principal **O-O**. Au contraire, le système optique **100** est configuré de telle sorte que plus l'angle d'émission d'un rayon lumineux rasant issu de la source de lumière **901** est proche du plan focal principal **911,** plus le rayon lumineux émergent respectif a une distance proche de l'axe optique principal **O-O.** Autrement dit, la distance comprise entre le rayon lumineux rasant émergent **996** issue d'un rayon lumineux rasant incident **961** et l'axe optique principal **0-0** est plus petite que la distance comprise entre le rayon lumineux intermédiaire émergent **998** issue d'un rayon lumineux intermédiaire incident **963** et l'axe optique principal **0-0** et respectivement l'angle d'émission d'un rayon lumineux rasant incident **961** et plus grand que l'angle d'émission d'un rayon lumineux intermédiaire incident **963.**

En d'autres termes, la deuxième surface émergente est configuré de sorte que la distance d'un rayon lumineux émergent par rapport à l'axe optique principal **0-0** diminue en fonction de l'augmentation de l'angle d'émission du rayon lumineux respectif issu de la source de lumière **901,** et réciproquement la distance d'un rayon lumineux émergent par rapport à l'axe optique principal **0-0** augmente en fonction de la diminution de l'angle d'émission du rayon lumineux respectif issu de la source de lumière **901.**

Selon un autre mode de réalisation, figure 5, le deuxième élément optique émergent **720** peut présenter une forme curviligne, plus précisément une forme convexe. Plus exactement, le deuxième élément optique émergent **720** peut présenter une forme d'élément optique convexe configurée pour permettre aux rayons émergeant d'émerger avec un angle compris entre 0° et 10°, en particulier entre 0° et 5° et de préférence entre 0° et 3° par rapport à l'axe optique principal **O-O.**

Ainsi, grâce à cette disposition, le deuxième élément optique incident **620** et le deuxième élément optique émergent **720** forment un élément optique asphérique biconvexe permettant au système optique **100** de focalise correctement les rayons lumineux incidents à la deuxième surface incidente.

Les paramètres qui sont le rayon de courbure de la forme curviligne du deuxième élément optique incident **620,** le rayon de courbure de la forme curviligne de la surface latérale **510** et le rayon de courbure de la forme curviligne du deuxième élément optique émergent **720** sont déterminés à l'aide d'un logiciel de conception optique tel que les logiciels ZEMAX^{™} et/ou Code V^{™}.

Le deuxième élément optique incident **620** comprend également une deuxième cavité proximale permettant de délimiter une zone d'intersection proximale entre la deuxième surface incidente de la première surface incidente **210.** Cette zone d'intersection distale est commune à la deuxième surface incidente et à la première surface incidente **210** et se présente sous la forme d'un deuxième point singulier proximal, où plus précisément une deuxième ligne singulière proximale à l'une de ces extrémités permettant ainsi de délimiter la deuxième surface incidente de la première surface incidente **210.** Plus exactement, le deuxième point singulier proximal est un deuxième point de rebroussement proximal, plus précisément un deuxième point de rebroussement proximal de premier degré formé partiellement par la forme convexe du deuxième élément optique incident **620.**

Bien entendu, en pratique, la deuxième ligne singulière proximale est une deuxième ligne de rebroussement proximale, plus précisément une deuxième ligne de rebroussement proximale de premier degré formé partiellement par la forme convexe du deuxième élément optique incident **620.**

Le faisceau latéral composite **960** incident à la deuxième surface incidente est réfracté ainsi vers la surface émergente et plus particulièrement vers la deuxième surface émergente **710.** La première surface émergente **410** est voisine à la deuxième surface émergente **710.**

Selon un autre mode de réalisation, le deuxième élément optique émergent **720** peut présenter une forme curviligne, plus précisément une forme convexe. Plus exactement, le deuxième élément optique émergent **720** peut présenter une forme d'élément optique convexe configurée pour permettre aux rayons lumineux émergeant d'émerger avec un angle compris entre 0° et 10°, en particulier entre 0° et 5° et de préférence entre 0° et 3° par rapport à l'axe optique principal **O-O.**

Ainsi, la configuration du deuxième élément optique émergent **720** et du deuxième élément optique incident **620** permettent une focalisation propre de la lumière en provenance de la source de lumière **901.** De cette manière, lorsqu'une source de lumière **901** est placée dans la cavité du système optique **100,** tous rayons issus de la source de lumière **901** et incidents à la deuxième surface incidente **610** sont réfractés vers le deuxième élément optique émergent **720** de sorte à émerger avec un angle compris entre 0° et 10°, en particulier entre 0° et 5° et de préférence entre 0° et 3° par rapport à l'axe optique principal **O-O.**

Lorsque l'ensemble des surfaces ont été mises en équation afin de focaliser la lumière sans projeter l'image des sources lumineuses, il est nécessaire d'uniformiser l'homogénéité du mélange de couleur à l'aide d'un ensemble de texture tridimensionnelle. L'ensemble de texture tridimensionnel, représenté sur les figures 6 à 10, comprend :
- une première texture tridimensionnelle **430** disposée sur la première surface émergente **410** de sorte à former une première surface texturée **460 ;** et
- une deuxième texture tridimensionnelle **730** disposée sur la deuxième surface émergente **710** de sorte à former une deuxième surface texturée **760.**

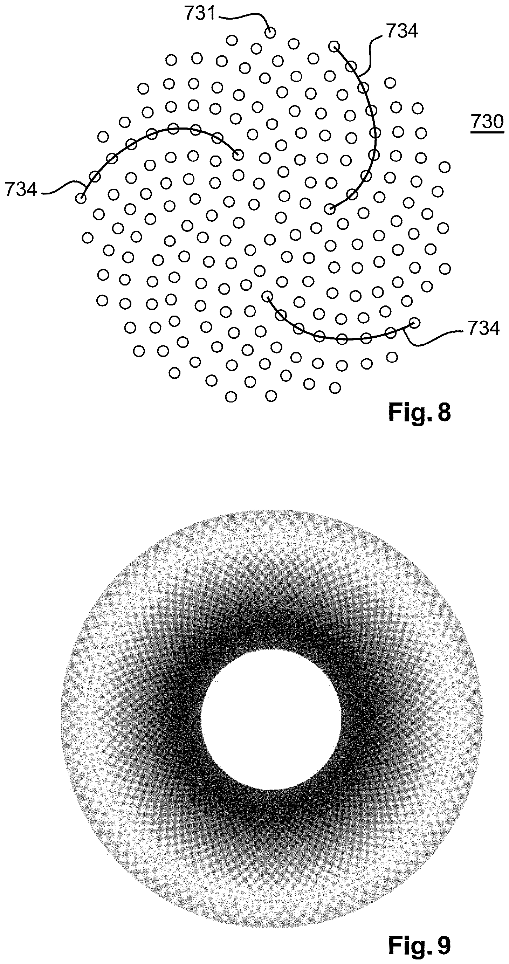

La première texture tridimensionnelle **430** (représentée sur la figure 6) et la deuxième texture tridimensionnelle **730** (représentée sur la figure 8) sont calculées en fonction de la première surface émergente **410** et de la deuxième surface émergente **710** respectivement c'est pourquoi l'ensemble de surface texturée comprend une première surface texturée **460** et une deuxième surface texturée **760** indépendantes l'une de l'autre, en d'autres termes, la première surface texturée **460** et la deuxième surface texturée **760** sont le résultat de fonctions composées afin de permettre un mélange de couleur le plus homogène et le plus uniforme possible. Exprimé autrement, l'ensemble de texture tridimensionnelle et l'ensemble de surface émergente ont un effet synergétique en combinaison.

Le motif élémentaire **431, 731** utilisé par la première texture tridimensionnelle **430** forme un premier réseau de motifs élémentaires **435.** Ce premier réseau de motifs élémentaires **435,** comme expliqué précédemment, est configuré pour être en fonction de la courbure de la première surface émergente **410,** en d'autres termes la géométrie du premier réseau de motifs élémentaires **435** et la géométrie de la première surface émergente **410** sont coordonnée pour homogénéiser et uniformiser le mélange de couleur.

Pour ce faire, le motif élémentaire **431, 731** comprend un profil de forme définie et finie, c'est-à-dire que le profil élémentaire est défini dans un espace finie de sorte à maitriser la direction des rayons lumineux émergents. Le profil du motif élémentaire **431, 731** est défini par une fonction polynomiale élémentaire ***f(x,y)*** définie sur un intervalle fini.

Cette fonction polynomiale élémentaire ***f(x,y)*** est configurée de sorte à présenter une continuité des tangentes avec la courbe de la première surface émergente **410.** En effet, comme décrit précédemment, la géométrie du motif élémentaire **431, 731** et la géométrie de la première surface émergente **410** sont coordonnée pour homogénéiser et uniformiser le mélange de couleur, c'est pourquoi la fonction polynomiale élémentaire ***f(x,y)*** présente un ensemble de dérivées premières égales aux points de jonction entre la fonction polynomiale élémentaire ***f(x,y)*** et la courbe de la première surface émergente **410.** Autrement dit, la fonction polynomiale est d'ordre C₁, c'est-à-dire que si la première surface texturée **460** est scrupuleusement observée le motif élémentaire **431, 731** ne présente pas d'angle vif ni d'arête avec la première surface émergente **410.** Dit autrement, la première surface texturée **460** a une surface libre de toute arête vive rentrante ou sortante.

Selon un autre mode de réalisation, le profil du motif élémentaire **431, 731** peut être défini par une fonction Spline définie sur un intervalle fini. Cette fonction Spline présente une continuité des tangentes avec la courbe de la première surface émergente **410.** En d'autres termes, la fonction Spline présente un ensemble de dérivées premières égales aux points de jonction entre la fonction Spline et la courbe de la première surface émergente **410.** Autrement dit, la fonction Spline est d'ordre C₁; c'est-à-dire que si la première surface texturée **460** est observée le motif élémentaire **431, 731** ne présente pas d'angle vif ni d'arête avec la première surface émergente **410.** Dit autrement, la première surface texturée 760 a une surface libre de toute arête vive rentrante ou sortante.

Le profil du motif élémentaire **431, 731** défini par au moins une des fonctions parmi la fonction polynomiale élémentaire ***f(x,y)*** et la fonction Spline, présente au moins une symétrie parmi une symétrie axiale, une symétrie planaire et une symétrie de révolution de sorte à avoir un mélange de couleur homogène.

Comme représenté sur la figure 8, le motif élémentaire **431, 731** peut également se répéter par au moins une translation selon un moins un vecteur parmi un premier vecteur primaire **436,** un deuxième vecteur primaire **437** et un troisième vecteur primaire **438** du repère primaire **439,** de sorte à répartir le motif élémentaire **431** sur la première surface émergente **410** sous la forme d'un premier réseau de motifs élémentaires **435** homogènement réparti. En d'autres termes, le motif élémentaire **431** se répète de façon périodique dans la direction d'au moins un des vecteurs primaires du repère primaire **439.**

Selon une variante, au moins deux des vecteurs primaires parmi le premier vecteur primaire **436,** le deuxième vecteur primaire **437** et le troisième vecteur primaire **438** du repère primaire **439** peuvent se sectionner en un point d'intersection de sorte à avoir une origine commune. Ainsi, le motif élémentaire **431** défini selon le premier vecteur primaire **436** et le motif élémentaire **431** défini selon le deuxième vecteur primaire **437,** par exemple, sont configurés pour donner la première surface texturée **460** ou pour donner une régularité à la première surface texturée **460.**

L'intersection d'au moins deux vecteurs primaire du repère primaire **439** peut former un angle compris entre 45° et 75°, en particulier entre 50° et 70° et notamment entre 55° et 65° ou un angle compris entre **100°** et 140°, en particulier entre 110° et 130° et notamment entre 115° et 125° selon les vecteurs primaires du repère primaire **439** sélectionnés. Ces intersections de vecteurs forment un premier réseau de motifs élémentaires **435** comprenant des mailles en forme de quadrilatère et en particulier de losanges.

Les mailles du premier réseau de motifs élémentaires **435** ainsi formées comprennent un ensemble de couronne **432** c'est-à-dire un ensemble de cercles concentriques, plus exactement un ensemble de couronne concentrique **432** de sorte à contribuer significativement à l'uniformisation du mélange de couleur. Chaque couronne **432** de l'ensemble de couronne concentrique comprend des motifs élémentaires **431** équidistant entre eux et équidistant par rapport à au moins un des points singuliers parmi le premier point singulier distal **451** et le deuxième point singulier distal **455.** En effet, comme exprimé précédemment, la première surface texturée **460** est le résultat de fonctions composées afin de permettre un mélange de couleur le plus homogène et le plus uniforme possible. C'est pourquoi, la première texture tridimensionnelle **430** et la première surface émergente **410** réalise de façon synergétique un mélange de couleur homogène et uniforme.

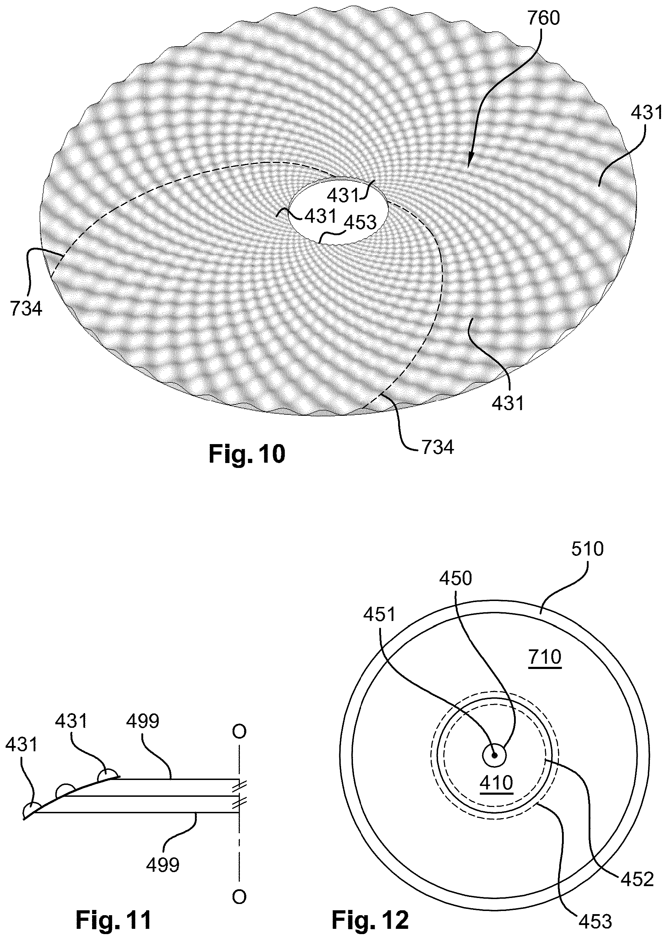

Une couronne **432** est configurée pour former un étage **499** c'est-à-dire que chaque motif élémentaire **431** formant la couronne **432** est réparti à la même hauteur sur la première surface émergente **410.** Ainsi, l'ensemble de couronnes 432 concentriques forme un ensemble d'étage **499** dont la projection orthogonale de chaque étage **499** est équidistante entre eux comme le montre la figure 11. Ce qui permet d'homogénéiser et d'optimiser le mélange de couleur par une géométrie de l'ensemble de couronne **432** coordonnée à la géométrie de la première surface émergente **410** en présentant une première texture tridimensionnelle **430** avec un premier réseau de motifs élémentaires **435** régulièrement répartis.

Selon la courbure de la première surface émergente **410,** la première texture tridimensionnelle **430** peut présenter des motifs élémentaires sensiblement réguliers afin d'optimiser l'homogénéisation et l'uniformisation du mélange de couleur. Par sensiblement régulier, il est entendu un motif élémentaire **431** au moins invariant dans une des dimensions parmi la longueur, la largeur et la hauteur dans au moins une des directions du premier vecteur primaire **436,** deuxième vecteur primaire **437** et troisième vecteur primaire **438** du repère primaire **439.**

Sur la figure 8, la deuxième texture tridimensionnelle **730** présent, quant à elle, un deuxième réseau de motifs élémentaires **735.** Ce deuxième réseau de motifs élémentaires **735** est configuré pour être en fonction de la courbure de la deuxième surface émergente. Ainsi, la géométrie du deuxième réseau de motifs élémentaires **735** et la géométrie de la deuxième surface émergente **710** sont coordonnées pour homogénéiser et uniformiser le mélange de couleur.

Pour ce faire, le deuxième réseau de motifs élémentaires se présente sous forme d'une pluralité de portions de spirales **734,** soit en pratique entre 96 et 128 le nombre de portions de spirales, de sorte à recouvrir totalement ou partiellement la deuxième surface émergente **710.**

Chaque portion de spirale **734** comprend des motifs élémentaires **731** régulièrement répartis sur la deuxième surface émergente **710.** Une portion de spirale **734** n'est pas physiquement représentée sur la surface émergente mais se présente sous la forme d'une succession de motifs élémentaires **731** qui forment une portion de spirale **734,** comme cela est représenté sur la figure 8. Chaque portion de spirale **734** prend naissance sur la délimitation commune distale, c'est-à-dire qu'elle a un centre situé dans la deuxième cavité distale et plus exactement sur le deuxième point singulier distal **455.** Plus précisément, chaque portion de spirale **734** comprend un centre situé sur la ligne singulière distale, plus exactement sur la ligne singulière distale commune et se déploie vers la bordure périphérique supérieure **790,** c'est-à-dire vers l'extrémité de la deuxième surface émergente **710** en faisant un angle compris entre 30° et 60°, en particulier entre 40° et 50° et de préférence entre 43° et 47°. Ce déploiement se réalise tant dans le sens trigonométrique direct que dans le sens trigonométrique indirect. La figure 10 en est une illustration.

Le motif élémentaire **731** comprend un profil de forme définie et finie, c'est-à-dire que le profil élémentaire est défini dans un espace finie de sorte à maitriser la direction des rayons lumineux émergents, comme précisé précédemment. La fonction polynomiale élémentaire ***f(x,y),*** formant le profil du motif élémentaire **731,** est configurée de sorte à présenter une continuité des tangentes avec la courbe de la deuxième surface émergente. En effet, comme décrit précédemment, la géométrie du motif élémentaire **731** et la géométrie de la deuxième surface émergente sont coordonnée pour homogénéiser et uniformiser le mélange de couleur, c'est pourquoi la fonction polynomiale élémentaire ***f(x,y)*** présente un ensemble de dérivées premières égales aux points de jonction entre la fonction polynomiale élémentaire ***f(x,y)*** et la courbe de la deuxième surface émergente. Autrement dit, la fonction polynomiale est d'ordre C₁, c'est-à-dire que si la deuxième surface texturée **760** est scrupuleusement observée le motif élémentaire **431, 731** ne présente pas d'angle vif ni d'arête avec la deuxième surface émergente. Dit autrement, la deuxième surface texturée **760** a une surface libre de toute arête vive rentrante ou sortante.

Dans un autre mode de réalisation, le profil du motif élémentaire **731** peut également être défini par une fonction Spline définie sur un intervalle fini. Cette fonction Spline présente une continuité des tangentes avec la courbe de la deuxième surface émergente. En d'autres termes, la fonction Spline présente un ensemble de dérivées premières égales aux points de jonction entre la fonction Spline et la courbe de la deuxième surface émergente. Autrement dit, la fonction Spline est d'ordre C₁; c'est-à-dire que si la deuxième surface texturée **760** est observée le motif élémentaire **731** ne présente pas d'angle vif ni d'arête avec la deuxième surface émergente.

Le profil du motif élémentaire, représenté par la référence **431** lorsqu'il s'agit de la première surface émergente **410** et par la référence **731** lorsqu'il s'agit de la deuxième surface émergente **610,** défini par au moins une des fonctions parmi la fonction polynomiale élémentaire ***f(x,y)*** et la fonction Spline, présente au moins une symétrie parmi une symétrie axiale, une symétrie planaire et une symétrie de révolution de sorte à avoir un mélange de couleur homogène.

Le profil du motif élémentaire **431, 731** se répète par translation selon un premier vecteur secondaire du repère secondaire. Plus exactement, c'est la fonction polynomiale élémentaire ***f*(*x,y*)** qui est répétée par translation selon le premier vecteur secondaire lors de la conception. Ainsi, le motif élémentaire **431, 731** se répète de façon périodique dans la direction du premier vecteur secondaire sur la deuxième surface émergente **710.** Lors de l'évolution, ou exprimé autrement, lors du déploiement de la portion de spirale **734** sur la deuxième surface émergente **710** au moins une des dimensions du motif élémentaire **731** parmi la longueur, la largeur et la hauteur, varie selon la distance du premier vecteur secondaire par rapport à la première surface émergente **410.** Plus exactement, le profil du motif élémentaire **731** varie par l'intermédiaire d'une symétrie cylindrique. En effet, la portion de spirale **734** se déploie de façon logarithmique, c'est-à-dire que l'ensemble de motifs élémentaires qui la compose sont de plus en plus grands au fur et à mesure que le motif élémentaire s'éloigne de la ligne singulière distale commune et se rapproche de la bordure périphérique supérieure **790** ou autrement dit de l'extrémité de la deuxième surface émergente **710.** En d'autres termes, au moins une des dimensions parmi la longueur, la largeur et la hauteur du motif élémentaire est modifié par une homothétie. La figure 10 illustre cet exemple.

Cette symétrie cylindrique est configurée pour permettre une transformation du motif élémentaire **731** par homothétie dont le centre est l'axe optique principal **O-O.**

## Revendications

1. Système optique (100) en matière transparente pour des longueurs d'onde comprises dans un ensemble de faisceaux de rayons lumineux et pour aligner ledit ensemble de faisceaux de rayons lumineux par rapport à un axe optique principal (O-O) à partir d'une source de lumière (901) comprenant un axe d'émission et au moins une surface émettrice (902) de rayons lumineux destinés à être émis dans un espace d'indice de réfraction supérieur ou égal à un ; ledit système optique (100) comprenant :
- une première surface incidente (210) comprenant un premier point singulier proximal (251) situé sur l'axe optique principal (O-O);
- une première surface émergente (410) comprenant un premier point singulier distal (451) situé sur l'axe optique principal (O-O) ;
la première surface incidente (210) et la première surface émergente (410) sont configurées de façon à définir une zone de foyer intermédiaire (930) située entre la première surface incidente (210) et la première surface émergente (410) ;
dans lequel la zone de foyer intermédiaire (930) présente une forme à symétrie de révolution,
la première surface émergente (410) présentant une forme de calotte torique et/ou la première surface incidente (210) présentant une forme de calotte torique ;
tel que le système comprend un ensemble de texture tridimensionnelle comprenant :
- une première texture tridimensionnelle (430) disposée sur la première surface émergente (410) de sorte à former une première surface texturée (460) ; et
- une deuxième texture tridimensionnelle (730) disposée sur une deuxième surface émergente de sorte à former une deuxième surface texturée (760), la deuxième surface émergente étant disposée latéralement par rapport à la première surface émergente.

2. Système optique (100) selon la revendication 1 ou 2, lequel comprenant une deuxième surface incidente (610), une deuxième surface émergente (710), et une surface latérale (510) configurée pour réfléchir par réflexion interne totale les rayons lumineux issus de la deuxième surface incidente (610) vers la deuxième surface émergente (710) de sorte que les rayons lumineux émergeant de la deuxième surface émergente soient compris dans un angle compris entre 0° et 10°, en particulier entre 0° et 5° et de préférence entre 0° et 3° par rapport à l'axe optique principal (O-O).

3. Système optique (100) selon la revendication 1 ou 2, dans lequel la première texture tridimensionnelle (430) comprend au moins un premier motif élémentaire (431) orienté sur la première surface texturée (460) selon au moins un vecteur d'un repère primaire (439).

4. Système optique (100) selon l'une quelconque des revendication 1 à 3, dans lequel la première surface texturée (460) a une surface libre de toute arête vive rentrante ou sortante.

5. Système optique (100) selon l'une quelconque des revendications 1 à 4, dans lequel la deuxième texture tridimensionnelle (750) comprend au moins un deuxième motif élémentaire (731) orienté sur la deuxième surface émergente (710) selon au moins un vecteur d'un repère secondaire.

6. Système optique (100) selon l'une quelconque des revendications 1 à 5, dans lequel la deuxième surface texturée (760) a une surface libre de toute arête vive rentrante ou sortante.

7. Système optique (100) selon la revendication 3, dans lequel le premier motif élémentaire (431) se répète par translation.

8. Système optique (100) selon la revendication 5, dans lequel le deuxième motif élémentaire (431) se répète par une rotation autour de l'axe optique principal (O-O) ou par une homothétie autour de l'axe optique principal (O-O).

9. Système optique (100) selon la revendication 2, dans lequel la deuxième surface émergente et la première surface émergente (410) sont délimitées par un deuxième point singulier distal (455) et/ou la deuxième surface incidente et la première surface incidente (210) sont délimitées par un deuxième point singulier proximal.

10. Système optique (100) selon l'une quelconque des revendications précédentes, dans lequel le point singulier de la première surface incidente (210) et le point singulier de la première surface émergente (410) sont situés sur l'axe optique principal (O-O) du système optique (100).

11. Dispositif lumineux pour aligner un ensemble de faisceaux de rayons lumineux par rapport à un axe de projection, comprenant au moins une source de lumière (901) et au moins un système optique (100) associé à chaque source de lumière (901) selon l'une quelconque des revendications 1 à 10.

## Patentansprüche

1. Optisches System (100) aus transparentem Werkstoff für Wellenlängen, die in einer Einheit von Lichtstrahlbündeln liegen und zum Ausrichten der Einheit von Lichtstrahlbündeln in Bezug auf eine optische Hauptachse (O-O) ausgehend von einer Lichtquelle (901), die eine Emissionsachse und mindestens eine Emissionsfläche (902) von Lichtstrahlen umfasst, die dazu bestimmt sind, in einen Raum mit einem Brechungsindex größer oder gleich eins emittiert zu werden; wobei das optische System (100) umfasst:
- eine erste Auftrefffläche (210), die einen ersten proximalen Einzelpunkt (251) umfasst, der sich auf der optischen Hauptachse (O-O) befindet;
- eine erste Austrittsfläche (410), die einen ersten distalen Einzelpunkt (451) umfasst, der sich auf der optischen Hauptachse (O-O) befindet;
wobei die erste Auftrefffläche (210) und die erste Austrittsfläche (410) derart konfiguriert sind, um einen Zwischenbrennpunktbereich (930) zu definieren, der sich zwischen der ersten Auftrefffläche (210) und der ersten Austrittsfläche (410) befindet;
wobei der Zwischenbrennpunktbereich (930) eine rotationssymmetrische Form aufweist,
wobei die erste Austrittsfläche (410) eine Form einer torischen Kalotte aufweist und/oder die erste Auftrefffläche (210) eine Form einer torischen Kalotte aufweist;
sodass das System eine Einheit mit einer dreidimensionalen Textur umfasst, Folgendes umfassend:
- eine erste dreidimensionale Textur (430), die derart auf der ersten Austrittsfläche (410) angeordnet ist, um eine erste texturierte Fläche (460) zu bilden; und
- eine zweite dreidimensionale Textur (730), die derart auf einer zweiten Austrittsfläche angeordnet ist, um eine zweite texturierte Fläche (760) zu bilden, wobei die zweite Austrittsfläche in Bezug auf die erste Austrittsfläche seitlich angeordnet ist.

2. Optisches System (100) nach Anspruch 1 oder 2, welches eine zweite Auftrefffläche (610), eine zweite Austrittsfläche (710) und eine Seitenfläche (510) umfasst, die konfiguriert ist, um durch interne Totalreflexion die aus der zweiten Auftrefffläche (610) stammenden Lichtstrahlen derart zur zweiten Austrittsfläche (710) zu reflektieren, dass die aus der zweiten Austrittsfläche austretenden Lichtstrahlen in einem Winkel liegen, der zwischen 0° und 10°, insbesondere zwischen 0° und 5° und vorzugsweise zwischen 0° und 3° in Bezug auf die optische Hauptachse (O-O) liegt.

3. Optisches System (100) nach Anspruch 1 oder 2, wobei die erste dreidimensionale Textur (430) mindestens ein erstes elementares Motiv (431) umfasst, das auf der ersten texturierten Fläche (460) entlang mindestens eines Vektors mit einem Hauptbezugspunkt (439) ausgerichtet ist.

4. Optisches System (100) nach einem der Ansprüche 1 bis 3, wobei die erste texturierte Fläche (460) eine Fläche frei von jeder scharfen ein- oder austretenden Kante aufweist.

5. Optisches System (100) nach einem der Ansprüche 1 bis 4, wobei die zweite dreidimensionale Textur (750) mindestens ein zweites elementares Motiv (731) umfasst, das auf der zweiten Austrittsfläche (710) entlang mindestens eines Vektors mit einem Sekundärbezugspunkt ausgerichtet ist.

6. Optisches System (100) nach einem der Ansprüche 1 bis 5, wobei die zweite texturierte Fläche (760) eine Fläche frei von jeder scharfen ein- oder austretenden Kante aufweist.

7. Optisches System (100) nach Anspruch 3, wobei sich das erste elementare Motiv (431) durch Translation wiederholt.

8. Optisches System (100) nach Anspruch 5, wobei sich das zweite elementare Motiv (431) durch eine Drehung um die optische Hauptachse (O-O) herum, oder durch eine Ähnlichkeitstransformation um die optische Hauptachse (O-O) herum wiederholt.

9. Optisches System (100) nach Anspruch 2, wobei die zweite Austrittsfläche und die erste Austrittsfläche (410) durch einen zweiten distalen Einzelpunkt (455) begrenzt sind, und/oder die zweite Auftrefffläche und die erste Auftrefffläche (210) durch einen zweiten proximalen Einzelpunkt begrenzt sind.

10. Optisches System (100) nach einem der vorstehenden Ansprüche, wobei sich der Einzelpunkt der ersten Auftrefffläche (210) und der Einzelpunkt der ersten Austrittsfläche (410) auf der optischen Hauptachse (O-O) des optischen Systems (100) befinden.

11. Leuchtvorrichtung zum Ausrichten einer Einheit von Lichtstrahlbündeln in Bezug auf eine Projektionsachse, mindestens eine Lichtquelle (901) und mindestens ein optisches System (100), das jeder Lichtquelle (901) zugeordnet ist, nach einem der Ansprüche 1 bis 10 umfassend.

## Claims

1. An optical system (100) made of transparent material for wavelengths included in a set of beams of light rays and for aligning said set of beams of light rays with respect to a main optical axis (O-O) from a light source (901) comprising an emission axis and at least one emitting surface (902) of light rays intended to be emitted in a space with a refractive index greater than or equal to one; said optical system (100) comprising:
- a first incident surface (210) comprising a first proximal singular point (251) located on the main optical axis (O-O);
- a first emergent surface (410) comprising a first distal singular point (451) located on the main optical axis (O-O);
the first incident surface (210) and the first emergent surface (410) are configured so as to define an intermediate focus zone (930) located between the first incident surface (210) and the first emergent surface (410);
wherein the intermediate focus zone (930) has a rotationally symmetrical shape,
the first emergent surface (410) having a toroidal cap shape and/or the first incident surface (210) having a toroidal cap shape;
such that the system comprises a set of three-dimensional texture comprising:
- a first three-dimensional texture (430) disposed on the first emergent surface (410) so as to form a first textured surface (460); and
- a second three-dimensional texture (730) disposed on a second emergent surface so as to form a second textured surface (760), the second emergent surface being disposed laterally with respect to the first emergent surface.

2. The optical system (100) according to claim 1, which comprises a second incident surface (610), a second emergent surface (710), and a lateral surface (510) configured to reflect by total internal reflection the light rays derived from the second incident surface (610) towards the second emergent surface (710) so that the light rays emerging from the second emergent surface are included in an angle comprised between 0° and 10°, in particular between 0° and 5° and preferably between 0° and 3° with respect to the main optical axis (O-O).

3. The optical system (100) according to claim 1 or 2, wherein the first three-dimensional texture (430) comprises at least one first elementary pattern (431) oriented on the first textured surface (460) along at least one vector of a primary mark (439).

4. The optical system (100) according to any one of claims 1 to 3, wherein the first textured surface (460) has a surface free of any inward or outward sharp edge.

5. The optical system (100) according to any one of claims 1 to 4, wherein the second three-dimensional texture (750) comprises at least one second elementary pattern (731) oriented on the second emergent surface (710) along at least one vector of a sub-mark.

6. The optical system (100) according to any one of claims 1 to 5, wherein the second textured surface (760) has a surface free of any inward or outward sharp edge.

7. The optical system (100) according to claim 3, wherein the first elementary pattern (431) is repeated by translation.

8. The optical system (100) according to claim 5, wherein the second elementary pattern (431) is repeated by a rotation around the main optical axis (O-O) or by a homothety around the main optical axis (O-O).

9. The optical system (100) according to claim 2, wherein the second emergent surface and the first emergent surface (410) are delimited by a second distal singular point (455) and/or the second incident surface and the first incident surface (210) are delimited by a second proximal singular point.

10. The optical system (100) according to any one of the preceding claims, wherein the singular point of the first incident surface (210) and the singular point of the first emergent surface (410) are located on the main optical axis (O-O) of the optical system (100).

11. A light device for aligning a set of beams of light rays with respect to a projection axis, comprising at least one light source (901) and at least one optical system (100) associated with each light source (901) according to any one of claims 1 to 10.
